(19)

Europäisches Patentamt

European Patent Office

Office européen des brevets

(11) **EP 4 296 330 A1**

(12) **EUROPEAN PATENT APPLICATION**
published in accordance with Art. 153(4) EPC

(43) Date of publication:
**27.12.2023 Bulletin 2023/52**

(21) Application number: **22755981.2**

(22) Date of filing: **04.02.2022**

(51) International Patent Classification (IPC):
**C09J 11/06** (2006.01)  **G02C 1/06** (2006.01)
**C09J 167/02** (2006.01)  **C09J 201/00** (2006.01)
**C09J 7/35** (2018.01)  **B32B 3/26** (2006.01)
**G02B 1/04** (2006.01)  **G02B 5/02** (2006.01)
**G02B 7/00** (2021.01)

(52) Cooperative Patent Classification (CPC):
**B32B 3/26; C09J 7/35; C09J 11/06; C09J 167/02; C09J 201/00; G02B 1/04; G02B 5/02; G02B 7/00; G02C 1/06**

(86) International application number:
**PCT/JP2022/004556**

(87) International publication number:
**WO 2022/176660 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2021 JP 2021025496**
**22.06.2021 JP 2021103318**

(71) Applicant: **Nitto Denko Corporation**
**Ibaraki-shi, Osaka 567-8680 (JP)**

(72) Inventors:
• **WAKAYAMA, Shunya**
  **Ibaraki-shi, Osaka 567-8680 (JP)**
• **KIRIBE, Shigeyoshi**
  **Ibaraki-shi, Osaka 567-8680 (JP)**
• **MATSUO, Naoyuki**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **OPTICAL LAMINATE, OPTICAL DEVICE, AND METHOD FOR PRODUCING OPTICAL LAMINATE**

(57)     An optical stack (**100A**) includes: a first optical sheet **(10a)** having a first principal face (**12s**) with a concavo-convex structure and a second principal face (**18s**) at an opposite side from the first principal face; and an adhesive layer (**20a**) that is disposed on the first principal face of the first optical sheet. The concavo-convex structure includes a plurality of dents (**14**) and flat portions (**10s**) between adjacent ones of the plurality of dents. The adhesive layer is in contact with the flat portions. A surface of the adhesive layer and the first principal face of the first optical sheet together define an internal space (**14a**) within each of the plurality of dents. In a plan view from a normal direction of the first principal face of the first optical sheet, an area ratio of air voids existing at interfaces between the flat portions and the adhesive layer to an area of the first optical sheet is 3% or less. A height of the adhesive layer existing in the plurality of dents is 2 $\mu$m or less.

EP 4 296 330 A1

*FIG.1A*

*FIG.1B*

**Description**

## TECHNICAL FIELD

The present invention relates to an optical stack, an optical device having such an optical stack, and a production method for such an optical stack.

## BACKGROUND ART

Optical sheets (e.g., microlens sheets, prism sheets, brightness enhancement films (e.g., Brightness Enhancement Film: BEF (registered trademark) manufactured by 3M) are used in various optical devices (e.g., display devices and illumination devices). In the present specification, "optical sheet" is not limited to those illustrated above, but broadly includes sheet-shaped optical components, and further includes, for example, diffusion plates and light guide plates. An optical device is attached to another optical sheet or an optical device by using an adhesive layer, for example. In the present specification, "optical stack" refers to a configuration including an optical sheet and an adhesive layer or including a plurality of optical sheets. In the present specification, "adhesive" is meant to encompass tackiness agents (also referred to as "pressure-sensitive adhesives").

The applicant has disclosed an optical stack (referred to as "optical sheet" in Patent Document 1) that can be used for display devices and illumination devices in Patent Document 1. The optical stack in Patent Document 1 has an optical sheet (e.g., microlens sheet) having a concavo-convex structure on its surface and an adhesive layer provided on the surface having the concavo-convex structure. The adhesive layer fills 5% to 90% of the convex height of the concavo-convex structure. The adhesive layer is formed from an adhesive composition containing a graft polymer, which is a (meth)acrylic polymer grafted with chains containing monomers containing cyclic ether groups, and a cationic photopolymerization initiator or heat-curing catalyst.

Moreover, Patent Documents 2 and 3 disclose light distribution structures that may be used for display devices or illumination devices, in which total reflection at interfaces of multiple air cavities is utilized. With the light distribution structures disclosed in Patent Documents 2 and 3, freedom and accuracy of light distribution control can be improved. The entire disclosure of Patent Documents 2 and 3 is incorporated herein by reference.

## CITATION LIST

### PATENT LITERATURE

[Patent Document 1] Japanese Laid-Open Patent Publication No. 2012-007046
[Patent Document 2] International Publication No. 2011/124765
[Patent Document 3] International Publication No. 2019/087118

## SUMMARY OF INVENTION

### TECHNICAL PROBLEM

When attaching an adhesive layer onto a surface of an optical sheet having a concavo-convex structure, the degree to which the adhesive layer penetrates into (fills in) the dents of the concavo-convex structure affects the functionality of the optical sheet. Therefore, it is desired to reduce the degree to which the adhesive layer penetrates into the dents of the concavo-convex structure (i.e., a ratio of the volume of any adhesive layer existing in spaces that are defined by the dents of the concavo-convex structure to the volume of such spaces).

The inventors have also considered utilizing a surface of the optical sheet having a concavo-convex structure and a surface of the adhesive layer that is attached to the surface of the optical sheet featuring the concavo-convex structure to create multiple air cavities (internal space) that constitute light distribution structures (light distribution control structures) as described in Patent Documents 2 and 3. Patent Documents 2 and 3 do not describe multiple air cavities (internal space) to constitute a light distribution structure being created by a surface of the optical sheet having a concavo-convex structure and a surface of the adhesive layer.

The present invention has been made in order to solve the aforementioned problems, and an objective thereof is to provide an optical stack having an adhesive layer such that the degree to which the adhesive layer penetrates into dents of a concavo-convex structure of an optical sheet is reduced, an optical device having such an optical stack, and a production method for such an optical stack.

**SOLUTION TO PROBLEM**

According to embodiments of the present invention, means for solution as recited in the following Items are provided.

[Item 1]

An optical stack comprising:

a first optical sheet having a first principal face with a concavo-convex structure and a second principal face at an opposite side from the first principal face; and
an adhesive layer that is disposed on the first principal face of the first optical sheet, wherein,
the concavo-convex structure includes a plurality of dents and flat portions between adjacent ones of the plurality of dents;
the adhesive layer is in contact with the flat portions;
a surface of the adhesive layer and the first principal face of the first optical sheet together define an internal space within each of the plurality of dents;
in a plan view from a normal direction of the first principal face of the first optical sheet, an area ratio of air voids existing at interfaces between the flat portions and the adhesive layer to an area of the first optical sheet is 3% or less; and
a height of the adhesive layer existing in the plurality of dents is 2 μm or less.

[Item 2]

The optical stack of Item 1, wherein the adhesive layer is any one of adhesive layers A, B and C as follows:

an adhesive layer A, having a creep deformation rate of 10% or less when a stress of 10000 Pa is applied for 1 second at 50°C and a creep deformation rate of 160 or less when a stress of 10000 Pa is applied for 30 minutes at 50°C in a creep test using a rotational rheometer,
the adhesive layer A having a 180° peel adhesive strength of 10 mN/20 mm or more with respect to a PMMA film;
an adhesive layer B, being formed by curing a curable resin in an adhesive composition that includes a polymer and the curable resin,
the adhesive layer B having a 23°C initial tensile modulus of elasticity of not less than 0.35 MPa and not more than 8.00 MPa before curing the curable resin in the adhesive composition and
having a 23°C initial tensile modulus of elasticity of 1.00 MPa or more after curing the curable resin in the adhesive composition; and
an adhesive layer C, being formed by cross-linking an adhesive composition containing: a polyester resin that is a copolymer of a polycarboxylic acid and a polyalcohol; a cross-linking agent; and at least one cross-linking catalyst selected from the group consisting of an organic zirconium compound, organic iron compound, and an organic aluminum compound,
the adhesive layer C having a gel fraction of 400 or more after being maintained at a temperature of 85°C and a relative humidity of 85% for 300 hours and
having a 180° peel adhesive strength of 100 mN/20 mm or more with respect to a PMMA film.

[Item 3]

The optical stack of Item 1 or 2, wherein a thickness of the adhesive layer above the flat portions is not less than 2.0 μm and not more than 15.0 μm.

[Item 4]

The optical stack of any one of Items 1 to 3, wherein, in a plan view in which the first optical sheet is viewed from a normal direction of the first principal face, a ratio of an area of the plurality of dents to an area of the first optical sheet is not less than 0.3% and not more than 80%.

[Item 5]

The optical stack of any one of Items 1 to 4, wherein the plurality of dents have a cross-section which is a triangle, a rectangle, or a shape that at least partially contains a curve.

[Item 6]

The optical stack of any one of Items 1 to 5, having a haze value of 5.0% or less.

[Item 7]

The optical stack of any one of Items 1 to 6, wherein each of the plurality of dents includes a first slope to direct a portion of light propagating in the adhesive layer toward the second principal face of the first optical sheet via total internal reflection, and a second slope at an opposite side from the first slope.

[Item 8]

The optical stack of Item 7, wherein an inclination angle $\theta a$ of the first slope is smaller than an inclination angle $\theta b$ of the second slope.

[Item 9]

An optical device comprising the optical stack of any one of Items 1 to 8.

[Item 10]

A production method for the optical stack of any one of Items 1 to 8, the production method comprising:

step a of applying an adhesive composition solution containing a (meth)acrylic polymer and/or a polyester-based polymer, a cross-linking agent, and a solvent onto a release-treated principal face of a substrate having the release-treated principal face to form an adhesive composition solution layer;
step b of removing the solvent in the adhesive composition solution layer to form an adhesive composition layer;
step c of providing, on a principal face of the adhesive composition layer at an opposite side from the substrate, a further substrate having a release-treated principal face, in such a manner that the release-treated principal face is in contact with the adhesive composition layer;
step d of allowing the (meth)acrylic polymer and/or polyester-based polymer in the adhesive composition layer to be cross-linked by the cross-linking agent to form the adhesive layer; and
step e of attaching together the first principal face of the first optical sheet and a principal face at a side defined by one of the substrate or the further substrate of the adhesive layer, wherein
the release-treated principal face of the one of the substrate or the further substrate has an arithmetic mean roughness Ra of less than 0.05 $\mu$m.

[Item 11]

The production method of Item 10, wherein the release-treated principal face of the one of the substrate or the further substrate has a maximum height Rz of less than 0.5 $\mu$m.

[Item 12]

The production method of Item 10 or 11, wherein step e is performed by a roll-to-roll method.

**ADVANTAGEOUS EFFECTS OF INVENTION**

According to an embodiment of the present invention, there is provided an optical stack having an adhesive layer such that the degree to which the adhesive layer penetrates into dents of a concavo-convex structure of an optical sheet is reduced, an optical device having such an optical stack, and a production method for such an optical stack.

**BRIEF DESCRIPTION OF DRAWINGS**

[FIG. **1A**] A schematic cross-sectional view of an optical stack **100A** according to an embodiment of the present invention.

[FIG. **1B**] A schematic cross-sectional view of an optical stack **101A** according to another embodiment of the present invention.

[FIG. **2**] A schematic cross-sectional view of the optical stack **100A**.

[FIG. **3**] A schematic perspective view of a first optical sheet **10a** included in the optical stack **100A**.

[FIG. **4A**] A schematic cross-sectional view of an illumination device **200A** that includes the optical stack **100A**.

[FIG. **4B**] A schematic cross-sectional view of an illumination device **200B** that includes the optical stack **100A**.

[FIG. **5**] A diagram schematically showing a step of producing the optical stack **100A** in roll-to-roll fashion.

[FIG. **6**] A diagram schematically showing a step of producing the optical stack **100A** in roll-to-roll fashion.

[FIG. **7A**] A schematic diagram for describing problems in producing an optical stack according to Comparative Example in roll-to-roll fashion.

[FIG. **7B**] A schematic diagram for describing problems in producing an optical stack according to Comparative Example in roll-to-roll fashion.

[FIG. **8**] A diagram schematically showing a step of producing the optical stack **100A** in roll-to-roll fashion.

[FIG. **9A**] A schematic plan view of a concavo-convex textured film **70** included in an optical stack according to an embodiment of the present invention.

[FIG. **9B**] A schematic cross-sectional view of the concavo-convex textured film **70**.

[FIG. **10**] A graph showing evaluation results of area ratio (%) of air voids and height ($\mu$m) of an adhesive layer existing in dents, in optical stacks according to Examples and Comparative Examples.

[FIG. **11A**] A schematic diagram for describing a method of evaluating changes in the degree of penetration into the dents of the adhesive layer by using an optical stack.

[FIG. **11B**] A schematic cross-sectional view for describing a method of evaluating changes in the degree of penetration into the dents of the adhesive layer by using an optical stack.

[FIG. **12**] Diagrams showing optical images of a sample **1000A** having an optical stack **100S** according to Example A, where: the top shows an optical image of the sample **1000A** before application of a force; the middle shows an optical image of the sample **1000A** during the force application; and the bottom shows an optical image of the sample **1000A** after removal of the force.

[FIG. **13**] Diagrams showing optical images of a sample having an optical stack according to Example B, where: the top shows an optical image of the sample before application of a force; the middle shows an optical image of the sample during the force application; and the bottom shows an optical image of the sample after removal of the force.

[FIG. **14A**] A schematic plan view of a concavo-convex textured film **52** included in an optical stack according to an embodiment of the present invention.

[FIG. **14B**] A schematic cross-sectional view of the concavo-convex textured film **52**.

[FIG. **15A**] A schematic plan view of a concavo-convex textured film **82** included in an optical stack according to an embodiment of the present invention.

[FIG. **15B**] A schematic cross-sectional view of a dent **84** in the concavo-convex textured film **82**.

[FIG. **15C**] A schematic plan view of a dent **84** in the concavo-convex textured film **82**.

## DESCRIPTION OF EMBODIMENTS

Optical stacks according to embodiments of the present invention and optical devices having such optical stacks will be described. Embodiments of the present invention are not limited to what is illustrated below.

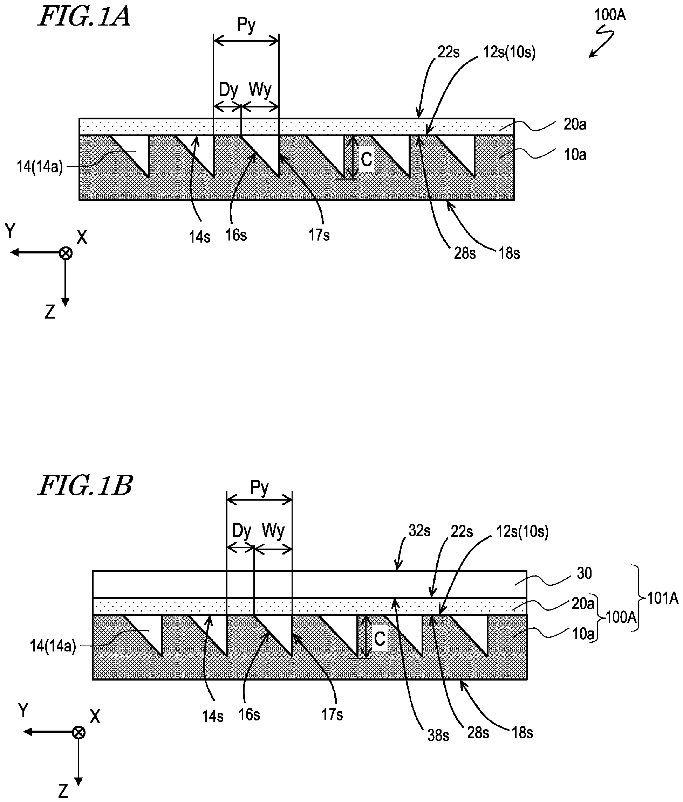

An optical stack according to an embodiment of the present invention includes: an optical sheet having a first principal face with a concavo-convex structure and a second principal face at an opposite side from the first principal face; and an adhesive layer that is disposed on the first principal face of the optical sheet. First, with reference to FIG. **1A,** FIG. **1B,** FIG. **2,** FIG. **3,** FIG. **4A,** and FIG. **4B,** an example will be described where an adhesive layer that is attached to a surface (first principal face) of an optical sheet featuring a concavo-convex structure has not penetrated into the dents of the concavo-convex structure.

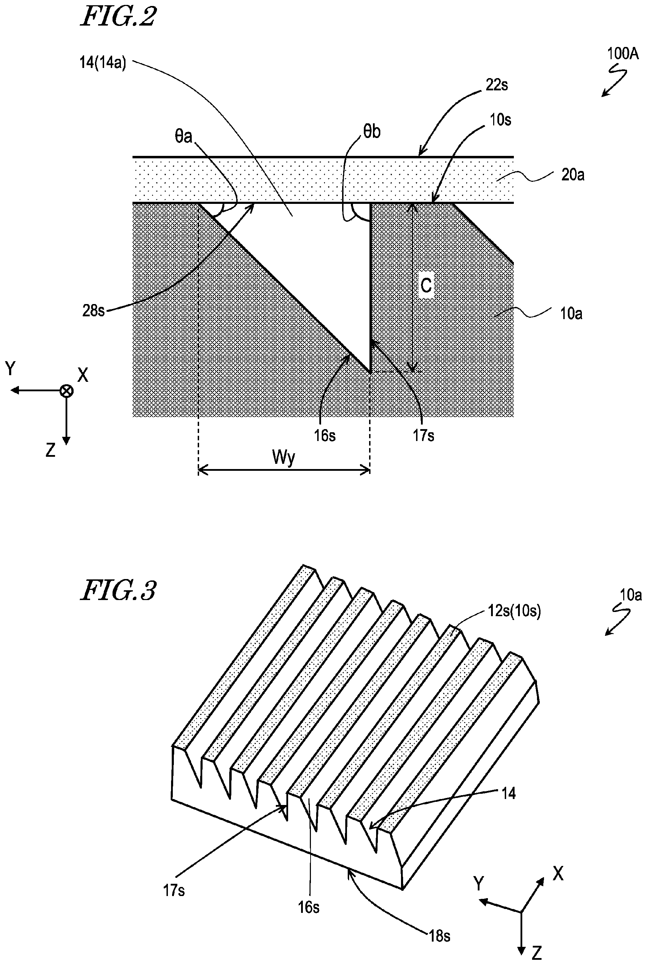

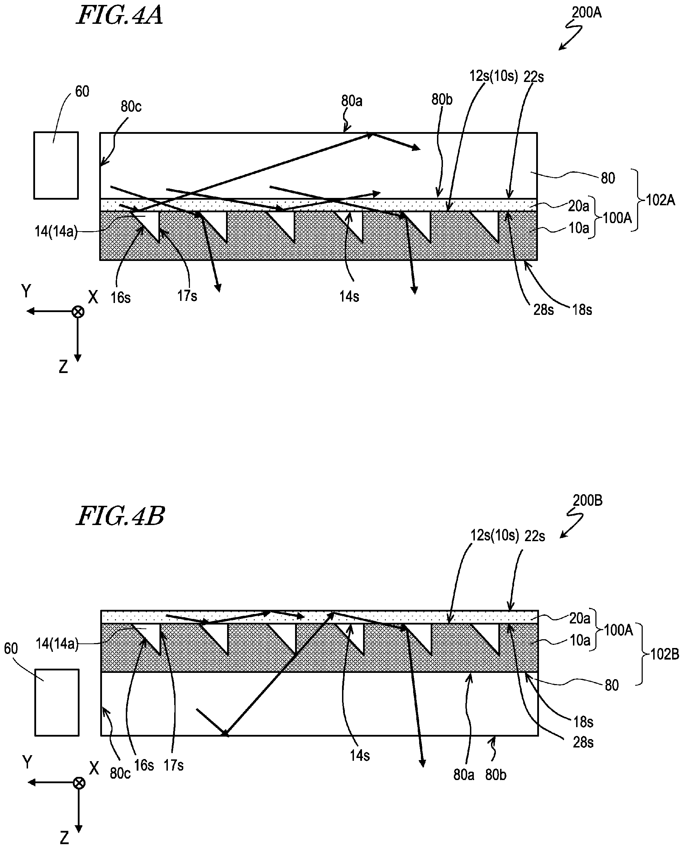

FIG. **1A** shows a schematic cross-sectional view of an optical stack **100A** according to an embodiment of the present invention. FIG. **1B** shows a schematic cross-sectional view of an optical stack **101A** according to an embodiment of the present invention. FIG. **2** is a schematic cross-sectional view showing enlarged a portion of the optical stack **100A.** FIG. **3** is a schematic perspective view of an optical sheet **10a** included in the optical stack **100A.** FIG. **4A** is a schematic cross-sectional view of an illumination device **200A** that includes the optical stack **100A.**

As shown in FIG. **1A,** the optical stack **100A** includes: the first optical sheet **10a** having a first principal face **12s** with a concavo-convex structure and a second principal face **18s** at an opposite side from the first principal face **12s;** and an adhesive layer **20a** that is disposed on the first principal face **12s** of the first optical sheet **10a.** The concavo-convex structure on the first principal face **12s** includes: a plurality of dents **14;** and flat portions **10s** between adjacent ones of the plurality of dents **14**. The adhesive layer **20a** is in contact with the flat portions **10s**. The surface of the adhesive layer **20a** and the first principal face **12s** of the first optical sheet **10a** together define an internal space **14a** within each of the plurality of dents **14**.

As shown in FIG. **1B**, the optical stack **101A** includes: the optical stack **100A**; and a second optical sheet **30** at an opposite side of the adhesive layer **20a** from the first optical sheet **10a**. Since the description of the optical stack **100A** is similarly applicable to the optical stack **101A** unless otherwise specified, such description may be omitted in order to avoid redundancy.

The second optical sheet **30** included in the optical stack **101A** has a principal face **38s** at a side closer to the adhesive layer **20a** and a principal face **32s** at an opposite side from the principal face **38s**. The principal face **38s** is a flat surface. At an opposite side of the second optical sheet **30** of the optical stack **101A** from the adhesive layer **20a** (i.e., on the principal face **32s**), at least one other optical component (or an optical sheet) may be provided. The other optical component (optical sheet) may include e.g. a diffusion plate and a light guide plate, and is adhesively bonded to the principal face **32s** of the optical sheet **30** via an adhesive layer.

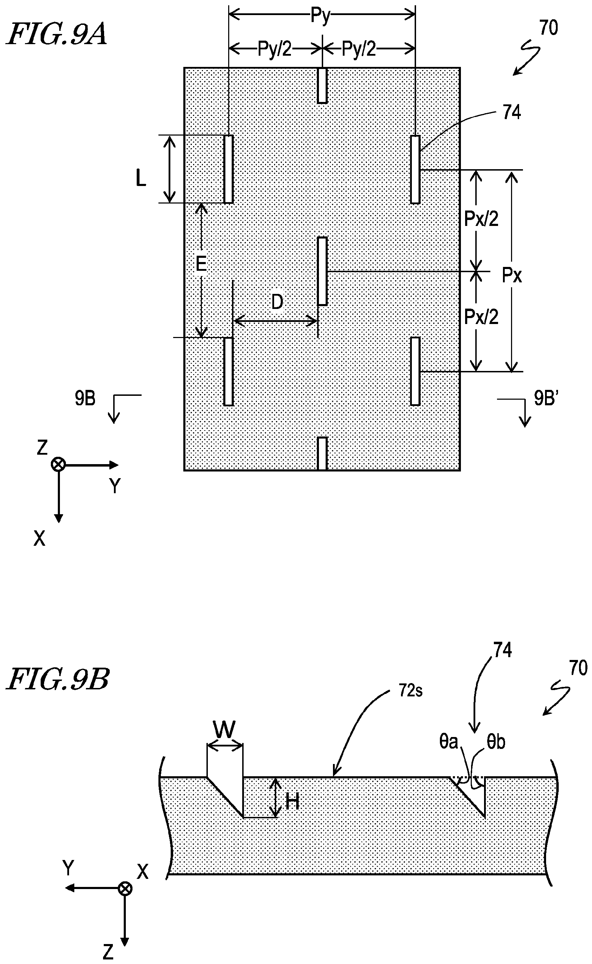

In the examples of FIG. **1A** and FIG. **2**, the adhesive layer **20a** has not penetrated into the dents **14**. In other words, no adhesive layer **20a** exists within the spaces defined by the dents **14**. A space defined by a dent **14** means a space that is defined by that dent **14** and by a sheet plane (a plane that is parallel to the XY plane) that contains flat portions **10s** that are adjacent to that dent **14**. Therefore, the internal spaces **14a** defined by a surface **28s** of the adhesive layer **20a** closer to the first optical sheet **10a** and by the first principal face **12s** of the first optical sheet **10a** coincide with the spaces defined by the dents **14** in this example. The internal spaces **14a** may be referred to as air cavities or optical cavities. Typically, the internal spaces **14a** are void portions filled with air inside. However, instead of air, the internal spaces **14a** may be filled with a material having a lower refractive index than those of the first optical sheet **10a** and the adhesive layer **20a**. In a plan view (the XY plane) in which the optical sheet is viewed from the normal direction of the principal face, the plurality of internal spaces may appear so that: as in the example of FIG. **3**, internal spaces which are continuous along the X direction (e.g. grooves in triangular prism shapes extending in the X direction) are provided discretely with respect to the Y direction; or, as in the example of FIG. **9A**, they are provided in island shapes that are discrete with respect to both the X direction and the Y direction. As will be shown in FIG. **4A** and FIG. **4B** discussed later, in an illumination device that includes the optical stack **100A**, the light-guiding direction in the lightguide layer **80** is the -Y direction. Although light propagates in various directions within the lightguide layer **80**, the -Y direction will be referred to as the light-guiding direction, and light containing a (non-zero) component in the -Y direction will be said to be propagating in the -Y direction.

The optical stack **100A** functions as a light distribution structure described in Patent Document 2 or 3. The optical stack **100A** includes a plurality of internal spaces **14a** that constitute interfaces for directing light in the Z direction (i.e., downward in the figure) via total internal reflection. The internal spaces **14a** are defined by surfaces **16s** and surfaces **17s**, which are part of the first principal face **12s** of the first optical sheet **10a**, and by the surface **28s** of the adhesive layer **20a** closer to the first optical sheet **10a**. Herein, each internal space **14a** has a cross-sectional shape (i.e., shape of a cross-section which is perpendicular to the X direction and which is parallel to the YZ plane) that is a triangle. The interface created by the slope **16s** functions as an interface for directing light in the Z direction (i.e., downward in the figure) via total internal reflection. Each of the plurality of dents **14**, that is, each of the plurality of internal spaces **14a**, includes: a slope (first slope) **16s** to direct a portion of light propagating in the optical stack **100A** toward the second principal face **18s** side of the first optical sheet **10a** (i.e., in the Z direction in the figure) via total internal reflection; and a slope (second slope) **17s** opposite to the slope **16s**. An inclination angle θ**a** of the slope **16s** is e.g. not less than 10° and not more than 70°. The lower limit is preferably 30° or more, and more preferably 45° or more. When the inclination angle θ**a** is smaller than 10°, the controllability of light distribution will decrease, and the light extraction efficiency may also decrease. On the other hand, when the inclination angle θ**a** exceeds 70°, it may become difficult to process a concavo-convex textured film, for example. The inclination angle θ**b** of the slope **17s** is e.g. not less than 50° and not more than 100°. Its lower limit is preferably 70° or more. When the inclination angle θ**b** is smaller than 50°, stray light may occur in unintended directions. On the other hand, when the inclination angle θb exceeds 100°, it may become difficult to process a concavo-convex textured film, for example. The inclination angle θ**a** of the slope **16s** and the inclination angle θ**b** of the slope **17s** are angles relative to a direction that is parallel to the Y direction, in a cross-section of the dent **14** (a cross-section which is perpendicular to the X direction and which is parallel to the YZ plane). In this example, the inclination angle θ**a** of the slope **16s** is smaller than the inclination angle θ**b** of the slope **17s**. In an illumination device (see FIG. **4A**, FIG. **4B**) that includes the optical stack **100A**, the slope **16s** is disposed closer to a light source **60** than is the slope **17s**. The shape of a cross-section (a cross-section which is perpendicular to the X direction and which is parallel to the YZ plane) of the internal space **14a** is defined by the inclination angle θ**a** of the slope **16s** and the inclination angle θ**b** of the slope **17s**, a width **Wy**, and a depth **C**. Without being limited to what is illustrated, the shape of the internal space **14a** (dent **14**) may be modified in various ways. By adjusting the shape, size, density of placement, etc., of the internal spaces **14a** (dents **14**), distribution of rays (intensity distribution) emitted from the optical stack **100A** can be adjusted (see, for example, Patent Documents 2 and 3) .

The optical stack functioning as a light distribution control structure may constitute a lightguide layer and/or a redirection layer having a plurality of internal spaces. For example, as shown in FIG. **4A,** the optical stack **100A** is used for an illumination device **200A.** The illumination device **200A** includes an optical stack **102A** and a light source **60.** The optical stack **102A** includes: the optical stack **100A;** and a lightguide layer **80** at an opposite side of the adhesive layer **20a** of the optical stack **100A** from the first optical sheet **10a.** The lightguide layer **80** is adhesively bonded to a surface **22s** of the adhesive layer **20a** at an opposite side from the first optical sheet **10a,** for example. The lightguide layer **80** has a first principal face **80a,** a second principal face **80b** at an opposite side from the first principal face **80a,** and a light-receiving portion **80c** to receive light which is emitted from the light source **60.** The light source **60** is e.g. an LED device, or an array of a plurality of LED devices may be used. As is indicated by arrows in FIG. **4A,** a portion of light that is led into the lightguide layer **80** undergoes total internal reflection (Total Internal Reflection: TIR) at the interface **16s** and interface **14s** created by the internal spaces **14a.** Light that has undergone total internal reflection at the interface **14s** (i.e., the surface **28s** of the adhesive layer **20a** closer to the first optical sheet) propagates in the lightguide layer **80** and the adhesive layer **20a,** whereas light that has undergone total internal reflection at the slope **16s** is emitted outside of the optical stack **102A** from the second principal face **18s** side of the first optical sheet **10a.**

Preferably, refractive indices of the lightguide layer **80,** the adhesive layer **20a,** and the first optical sheet **10a** are essentially equal to one another. The difference in refractive index between the lightguide layer **80** and the adhesive layer **20a** (absolute value) and the difference in refractive index between the adhesive layer **20a** and the first optical sheet **10a** (absolute value) are, each independently, preferably e.g. 0.20 or less, more preferably 0.15 or less, and still more preferably 0.10 or less.

The thickness of the adhesive layer **20a** is e.g. not less than 2.0 $\mu$m and not more than 15.0 $\mu$m. Its lower limit value is preferably 4.0 $\mu$m or more. Its upper limit value is preferably 11.0 $\mu$m or less, and more preferably 9.0 $\mu$m or less. Unless otherwise specified, the thickness of the adhesive layer refers to its thickness above the flat portions **10s** of the first principal face **12s** of the first optical sheet **10a.**

The optical stack **100A** has a haze value of e.g. 5.0% or less. The haze value can be measured by using a haze meter (machine name: "HZ-1", manufactured by Suga Testing Machinery Co.), with D65 light, for example.

As in an illumination device **200B** shown in FIG. **4B,** the lightguide layer **80** may be provided on the first optical sheet **10a** side of the optical stack **100A** (i.e., so as to be closer to the first optical sheet **10a** than to the adhesive layer **20a).** The lightguide layer **80** and the first optical sheet **10a** may be attached via an adhesive layer. In the illumination device **200B,** too, light that has undergone total internal reflection at the interface **14s** (surface **28s** of the adhesive layer **20a** closer to the first optical sheet) propagates in the adhesive layer **20a,** whereas light that has undergone total internal reflection at the slope **16s** is emitted outside of the optical stack **102B** from the second principal face **18s** side of the first optical sheet **10a.**

Without being limited to the aforementioned examples, illumination devices according to embodiments of the present invention may be modified in various ways. For example, in the illumination device **200A,** a substrate layer may be provided at an opposite side of the optical stack **100A** from the lightguide layer **80.** Instead of the substrate layer, an anti-reflection layer may be used; instead of the substrate layer, a hard coat layer (e.g. pencil hardness H or higher) may be provided. An anti-reflection layer and/or a hard coat layer may be provided on the substrate layer. At an opposite side from the outgoing surface (i.e., upward in the figure) of the lightguide layer **80,** an anti-reflection layer and/or a hard coat layer may be provided. The anti-reflection layer and the hard coat layer can be formed by using known materials and known methods. A low-refractive index layer may be provided between the optical stack **102A** and the substrate layer (or anti-reflection layer and/or hard coat layer).

In the exemplary illumination device **200B,** a substrate layer may be provided at an opposite side of the optical stack **100A** from the lightguide layer **80.** Instead of the substrate layer, an anti-reflection layer and/or a hard coat layer (e.g. pencil hardness H or higher) may be provided. An anti-reflection layer and/or a hard coat layer may be provided on the substrate layer. An anti-reflection layer and/or a hard coat layer may be provided at the outgoing surface side (i.e., downward in the figure) of the lightguide layer **80.** A low-refractive index layer may be provided between the optical stack **102B** and the substrate layer (or anti-reflection layer and/or hard coat layer).

As shown in FIG. **3,** the first optical sheet **10a** is such that, in a plan view from the normal direction of the first principal face **12s,** each of the plurality of dents **14** extends along the X direction and is continuous along the X direction. The plurality of dents **14** are provided discretely with respect to the Y direction, with flat portions **10s** provided between dents **14.** Regarding the Y direction, the dents **14** are provided preferably periodically along the Y direction, with a pitch **Py** of e.g. not less than 6 $\mu$m and not more than 120 $\mu$m. The width Wy of the dents **14** is e.g. not less than 3 $\mu$m and not more than 20 $\mu$m, and a width **Dy** of the flat portions **10s** is e.g. not less than 3 $\mu$m and not more than 100 $\mu$m. A ratio Wy/Dy between the width **Wy** of the dents **14** and the width **Dy** of the flat portions **10s** is e.g. not less than 0.3 and not more than 7. The depth **C** (depth along the Z direction) of the dents **14** is e.g. not less than 1 $\mu$m and not more than 100 $\mu$m. The depth **C** of the dents **14** is preferably 20 $\mu$m or less, and more preferably 12 $\mu$m or less. The depth **C** of the dents **14** is preferably 4 $\mu$m or more, more preferably 6 $\mu$m or more, and more preferably 8 $\mu$m or more.

Regarding the density of the plurality of dents **14,** in a plan view of the first optical sheet **10a** from the normal direction of the first principal face **12s,** a ratio (occupied area ratio) of the area of the plurality of dents **14** to the area of the first optical sheet **10a** is preferably 0.3% or more, from the standpoint of obtaining a good luminance. The occupied area ratio of the plurality of dents **14** is to be appropriately selected in accordance with the intended application; for example, in applications where transparency is needed, it is preferably not less than 0.3% and not more than 10%, and more preferably not less than 0.5% and not more than 40. In applications where higher luminance is required, it is preferably not less than 30% and not more than 80%. Note that the occupied area ratio of the plurality of dents **14** may be uniform, or the occupied area ratio may increase with increasing distance from the light source to ensure that luminance will not decrease with increasing distance from the light source (e.g., the light source **60** in FIG. **4A** or FIG. **4B**) .

Instead of the first optical sheet **10a,** a concavo-convex textured film **70** (optical sheet) as shown in FIG. **9A** and FIG. **9B** may be used, for example. The concavo-convex textured film **70** has a principal face with a concavo-convex structure, where the concavo-convex structure includes a plurality of dents **74** and flat portions **72s** between adjacent dents **74.** In a plan view in which the concavo-convex textured film **70** is viewed from the normal direction of the principal face (see FIG. **9A),** the plurality of dents **74** are provided in island shapes that are discrete with respect to both the X direction and the Y direction. In the textured film **70,** the size (length **L,** width **W:** see FIG. **9A** and FIG. **9B**) of the dents **74** is such that the length **L** is preferably not less than 10 $\mu$m and not more than 500 $\mu$m, and the width **W** is preferably not less than 1 $\mu$m and not more than 100 $\mu$m, for example. From the standpoint of light extraction efficiency, the depth **H** is preferably not less than 1 $\mu$m and not more than 100 $\mu$m. The depth **H** of the dents **74** is preferably 20 $\mu$m or less, and more preferably 12 $\mu$m or less. The depth **H** of the dents **74** is preferably 4 $\mu$m or more, more preferably 6 $\mu$m or more, and more preferably 8 $\mu$m or more. In the case where the plurality of dents **74** are to be distributed discretely and uniformly, they are disposed preferably periodically as shown in FIG. **9A,** for example. The pitch **Px** is preferably e.g. not less than 10 $\mu$m and not more than 500 $\mu$m, and the pitch **Py** is preferably e.g. not less than 10 $\mu$m and not more than 500 $\mu$m. Without being limited to the example of FIG. **9A,** when used in an illumination device, the plurality of dents may be disposed discretely with respect to the light-guiding direction of the lightguide layer and any direction intersecting the light-guiding direction of the lightguide layer.

Regarding the density of the plurality of dents **74,** in a plan view (FIG. **9A)** of the concavo-convex textured film **70** from the normal direction of the principal face, a ratio (occupied area ratio) of the area of the plurality of dents **74** to the area of the concavo-convex textured film **70** is preferably 0.3% or more, from the standpoint of obtaining a good luminance. The occupied area ratio of the plurality of dents **74** is to be appropriately selected in accordance with the intended application; for example, in applications where transparency is needed, it is preferably 300 or less in order to obtain a good visible light transmittance and haze value, and preferably 1% or more from the standpoint of obtaining a good luminance. Its upper limit value is still more preferably 250 or less, and, for a high visible light transmittance, it is preferably 10% or less, and still more preferably 5% or less. For example, it is preferably not less than 0.3% and not more than 10%, and more preferably not less than 0.5% and not more than 40. In applications where higher luminance is required, it is preferably not less than 30% and not more than 80%. Note that the occupied area ratio of the plurality of dents **74** may be uniform, or the occupied area ratio may increase with increasing distance to ensure that luminance will not decrease with increasing distance from the light source (e.g., the light source **60** in FIG. **4A** or FIG. **4B).**

An example has been illustrated where the dents **14** have a triangular cross-sectional shape. Without being limited to this example, however, the cross-sectional shape of the dents **14** may be a rectangle (e.g. a trapezoid) so long as it has a surface that can create an interface for directing light in the Z direction via total internal reflection, for example. Without being limited to a polygon, it may be a shape that at least partially contains a curve, or the like. A shape that at least partially contains a curve may be a shape that includes a part of the circumference of a circle or an ellipse, or a combination of multiple curves of different curvatures, for example.

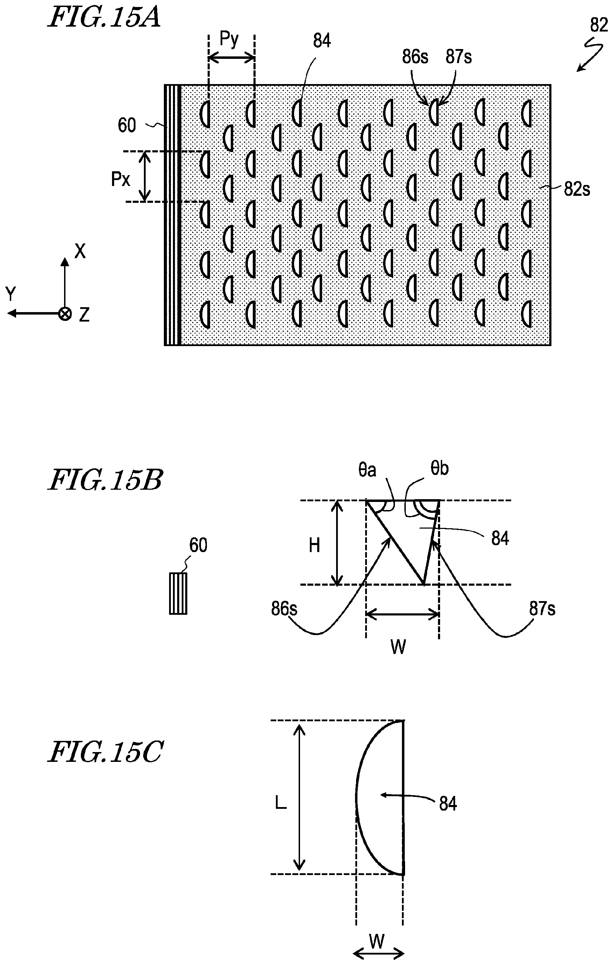

Instead of the first optical sheet **10a,** a concavo-convex textured film **82** (optical sheet) as used in FIG. **15A** may be used, for example. FIG. **15A** also illustrates the light source **60.** The concavo-convex textured film **82** has a principal face with a concavo-convex structure, where the concavo-convex structure includes a plurality of dents **84** and flat portions **82s** between adjacent dents **84.** Each of the plurality of dents **84** includes: a first slope **86s** to direct a portion of light propagating in the optical stack in the Z direction via total internal reflection; and a second slope **87s** at an opposite side from the first slope **86s.** As shown in FIG. **15A,** in a plan view as viewed from the normal direction of the principal face of the concavo-convex textured film **82** featuring the concavo-convex structure, the first slope **86s** of each dent **84** presents a curved surface that is convex toward the light source **60.** In the case where a plurality of LED devices arranged along the X direction are used as the light source **60,** light that is emitted from each LED device has some spread with respect to the Y direction; therefore, the first slope **86s** will act more uniformly for light if the first slope **86s** has a curved surface that is convex toward the light source **LS.** In the case where coupling optics are provided between the light source **60** and the light-receiving portion **80c** of the lightguide layer **80** to ensure that light of a high degree of parallelism (i.e., light having little spread with respect to the Y direction) will be incident, the first slope **86s** may be parallel to the X direction. The preferable ranges of the size (length **L,** width **W:** see FIG. **15B** and FIG. **15C)** and the depth **H** (see FIG. **15C)** and the pitches **Px** and **Py** of the dents **84** may be identical to those of the dents **74** of the concavo-convex textured film **70,** for example.

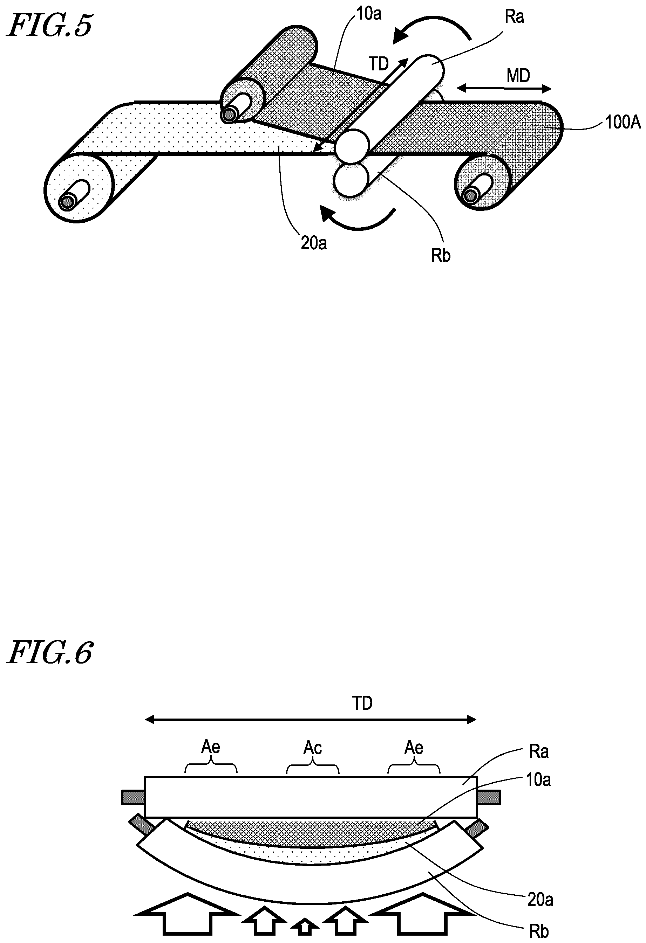

The optical stack **100A** can be produced by attaching the adhesive layer **20a** to the surface **12s** of the first optical sheet **10a** featuring a concavo-convex structure by roll-to-roll method, for example. From the mass producibility standpoint, the optical stack **100A** is preferably produced in roll-to-roll fashion as shown in FIG. **5.**

As shown in FIG. **5**, while rolls **Ra** and **Rb** are rotating in directions indicated by arrows, the first optical sheet **10a** and the adhesive layer **20a** are attached together. For example, one of the rolls **Ra** and **Rb** is a drive roll and the other is a driven roll. The pressure (nip pressure, pressure of attaching together, lamination pressure) that is applied to the first optical sheet **10a** and the adhesive layer **20a** in between the roll **Ra** and the roll **Rb** may vary depending on the position of the optical stack **100A** along the TD (Transverse Direction) direction (i.e., a direction which is parallel to the axes of the rolls **Ra** and **Rb**). Typically, as shown in FIG. **6,** a larger pressure is applied to the first optical sheet **10a** and the adhesive layer **20a** at opposite ends **Ae** of the TD direction than at the central portion **Ac** of the TD direction. In FIG. **6,** the magnitude of the pressure that is applied to the first optical sheet **10a** and the adhesive layer **20a** in between the rolls **Ra** and **Rb** is indicated schematically by the size of blank arrows.

According to studies by the inventors, the following problems may occur when an optical stack according to Comparative Examples is produced in roll-to-roll fashion by using an adhesive layer **90** according to Comparative Example and a first optical sheet **10a**. Herein, an example will be described where an optical stack is produced in roll-to-roll fashion by replacing the adhesive layer **20a** of the optical stack **100A** according to an embodiment of the present invention with an adhesive layer **90** according to Comparative Example.

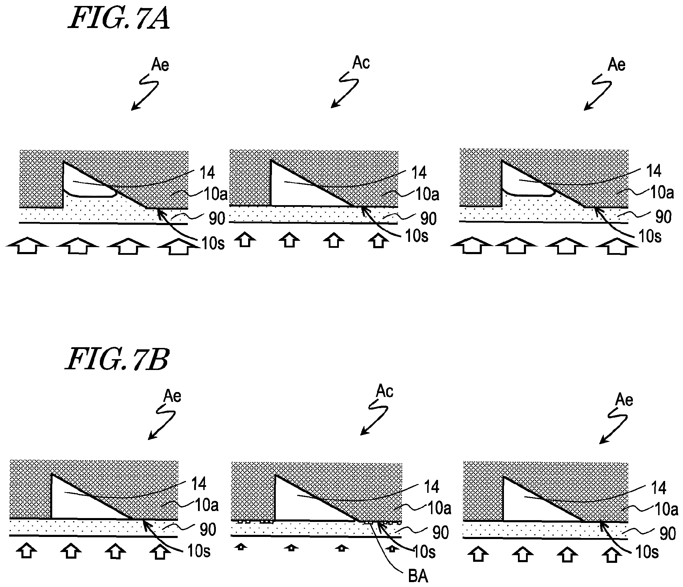

For example, as shown in FIG. **7A,** if pressure is adjusted so that an appropriate pressure is applied (that is, so that the adhesive layer **90** has good adhesion with the surface **12s** of the optical sheet **10a** featuring a concavo-convex structure while suppressing penetration of the adhesive layer **90** into the dent **14)** to the optical sheet **10a** and the adhesive layer **90** at the central portion **Ac** of the TD direction, a greater pressure will be applied to the first optical sheet **10a** and the adhesive layer **90** at opposite ends **Ae** of the TD direction, such that the adhesive layer **90** may excessively penetrate into the dent **14** at the opposite ends **Ae.** On the other hand, as shown in FIG. **7B,** if the adjustment is made so that an appropriate pressure is applied to the optical sheet **10a** and the adhesive layer **90** at the opposite ends **Ae** of the TD direction, the pressure applied to the first optical sheet **10a** and the adhesive layer **90** at the central portion **Ae** will be smaller, such that excessive air voids **BA** may occur at interfaces between the flat portions **10s** of the first optical sheet **10a** and the adhesive layer **90,** resulting in inadequate adhesion with the first surface **12s** of the optical sheet **10a** featuring a concavo-convex structure. Thus, with a conventional adhesive layer, it may be difficult to simultaneously achieve suppression of penetration of the adhesive layer into the dents **14** of the concavo-convex structure and suppression of air voids occurring at interfaces between the flat portions **10s** of the concavo-convex structure and the adhesive layer. An optical stack that is produced in roll-to-roll fashion has a length along the TD direction of e.g. about several meters. The above problem is more likely to occur when the optical stack has a greater length along the TD direction.

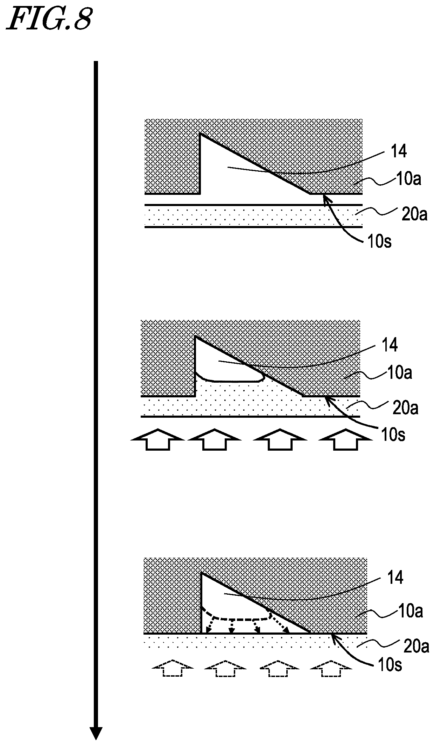

The inventors have found that, as shown in FIG. **8,** the aforementioned problem described with reference to FIG. **7A** and FIG. **7B** can be solved by using a predetermined adhesive layer **20a.** The arrow at the left of FIG. 8 represents chronological order. The first optical sheet **10a** and the adhesive layer **20** are provided (top of FIG. **8**), and when the surface of the first optical sheet **10a** featuring a concavo-convex structure and the adhesive layer **20** are attached together, sufficient pressure is applied at interfaces between the flat portions **10s** of the concavo-convex structure and the adhesive layer **20a** so that excessive air voids will not occur. At this time, the adhesive layer **20a** may temporarily have an excessive penetration into the dent **14** during lamination (middle of FIG. **8**). The reason is that, once the pressure that was being applied during lamination is removed, the degree of penetration (filling) of the adhesive layer **20a** into the dent **14** will decrease (bottom of FIG. **8**). Example of such adhesive layers **20a** will be illustrated by experimental examples discussed later. In the resultant optical stack **100A,** penetration of the adhesive layer **20a** into the dents **14** is suppressed, and also air voids existing at interfaces between the flat portions **10s** of the concavo-convex structure and the adhesive layer **20a** are reduced. In an optical stack according to an embodiment of the present invention, in a plan view from the normal direction of the first principal face of the first optical sheet, an area ratio of air voids existing at interfaces between the flat portions **10s** and the adhesive layer **20a** to the area of the first optical sheet is 3% or less, and the height of the adhesive layer **20a** existing in the plurality of dents **14** is 2 $\mu$m or less. The height of the adhesive layer **20a** existing in a dent **14** is the height of the adhesive layer **20a** along the Z direction in a cross section of the dent **14** (i.e., a cross section which is perpendicular to the X direction in FIG. **1A** and which is parallel to the YZ plane), and is determined relative to the flat portions **10s.** The height of the adhesive layer **20a** existing in a dent **14** can be determined by measuring a maximum value of the height of the adhesive layer **20a** existing in that dent **14** from a cross-sectional SEM image of an arbitrarily selected dent **14,** as carried out in below-described Examples, for example. An area ratio of the air voids can be measured by a method described in below-described Examples, for example. The area ratio of the air voids is preferably 2.50 or less, more preferably 1.50 or less, and still more preferably 0.1% or less. The height of the adhesive layer existing in the plurality of dents is preferably 1 $\mu$m or less, and more preferably 0.6 $\mu$m or less. Note that optical stacks according to embodiments of the present invention are not limited to those which are produced in roll-to-roll fashion. Also in optical stacks which are produced by production methods other than roll-to-roll, penetration of the adhesive layer into the dents is suppressed, and air voids existing at interfaces between the flat portions and the adhesive layer are suppressed.

Likeliness of air voids at interfaces between the flat portions of the concavo-convex structure and the adhesive layer is also affected by the surface roughness of the adhesive layer. Therefore, the area ratio of the air voids may also vary depending on the surface roughness of the adhesive layer. Air voids are likely to occur when the surface (i.e., the surface at the first optical sheet side) of the adhesive layer has a large surface roughness.

One possible method for reducing the surface roughness of the surface (i.e., the surface at the first optical sheet side) of the adhesive layer may be as follows. The adhesive layer is formed by the following method, for example. First, an adhesive composition solution containing a (meth)acrylic polymer and/or a polyester-based polymer, a cross-linking agent, and a solvent is applied onto a release-treated principal face of a substrate (first separator) having the release-treated principal face, thereby forming an adhesive composition solution layer. Next, the solvent in the adhesive composition solution layer is removed, thereby forming an adhesive composition layer. Then, on a principal face of the adhesive composition layer at an opposite side from the first separator, a further substrate (second separator) having a release-treated principal face is provided in such a manner that the release-treated principal face is in contact with the adhesive composition layer. Next, the (meth)acrylic polymer and/or polyester-based polymer in the adhesive composition layer is cross-linked by a cross-linking agent to obtain an adhesive layer. In other words, at this point, a multilayered body having a layered structure of substrate (first separator)/adhesive layer/further substrate (second separator) is obtained. A multilayered body including a substrate(s) having a release-treated principal face and an adhesive layer may be referred to as an adhesive sheet. Either the principal face at the first separator side or the principal face at the second separator side of the adhesive layer obtained in this manner is attached onto the surface of the first optical sheet (concavo-convex textured film) featuring a concavo-convex structure, whereby an optical stack according to an embodiment of the present invention is obtained. For example, in the case where the principal face of the adhesive layer at the second separator side is to be attached onto the surface of the first optical sheet (concavo-convex textured film) featuring a concavo-convex structure, the release-treated principal face (i.e., the surface at the adhesive layer side) of the second separator has an arithmetic mean roughness Ra of preferably e.g. less than 0.05 μm, and more preferably less than 0.03 μm. Although the lower limit value of the arithmetic mean roughness Ra is not particularly limited, it may be e.g. 0.001 μm. The release-treated principal face (i.e., the surface at the adhesive layer side) of the second separator has a maximum height Rz of e.g. less than 0.5 μm, and preferably less than 0.3 μm. Although the lower limit value of the maximum height Rz is not particularly limited, it may be e.g. 0.005 μm.

When producing an optical stack in roll-to-roll fashion, for example, the y direction or the -y direction of the first optical sheet **10a** may be chosen as the MD (Machine Direction) direction. For example, in the example shown in FIG. **1,** the slope **16s** of the dent **14** that has the smaller inclination angle θ**a** may be disposed closer to the nipping portion between the rolls **Ra** and **Rb** than is the slope **17s** having the larger inclination angle θ**b**. However, the degree of penetration of the adhesive layer **20a** into the dent **14** is not significantly affected by the direction of attaching together.

[Examples of preferable configurations of adhesive layer]

Specific examples of an adhesive layer included in an optical stack according to an embodiment of the present invention will be illustrated below. When attached to a surface of an optical sheet featuring a concavo-convex structure, each of adhesive layers A, B and C below, its penetration into the dents of the concavo-convex structure and its change over time are suppressed, and therefore is suitably used for an optical stack according to an embodiment of the present invention. Note that the adhesive layer included in an optical stack according to an embodiment of the present invention is not to be limited to the examples below.

(1) adhesive layer A

International Publication No. 2021/167090 by the applicant describes an adhesive layer (which hereinafter may be referred to as "adhesive layer A") which has a creep deformation rate of 10% or less when a stress of 10000 Pa is applied for 1 second at 50°C and a creep deformation rate of 160 or less when a stress of 10000 Pa is applied for 30 minutes at 50°C in a creep test using a rotational rheometer, and which has a 180° peel adhesive strength of 10 mN/20 mm or more with respect to a PMMA film. According to a study by the applicant, the degree of penetration into the dents, as well as change over time thereof, when an adhesive layer is attached to a surface of an optical sheet featuring a concavo-convex structure is correlated with the creep deformation rate of the adhesive layer. Specifically, an adhesive layer which has a creep deformation rate of 10% or less when a stress of 10,000 Pa is applied for 1 second at 50°C in a creep test using a rotational rheometer has a reduced degree of penetration into the dents of the concavo-convex structure when being attached to a surface having a concavo-convex structure, and an adhesive layer which has a creep deformation rate of 160 or less when a stress of 10,000 Pa is applied for 30 minutes (1800 seconds) at 50°C in a creep test using a rotational rheometer has reduced change over time in its degree of penetration into the dents of the concavo-convex structure. The entire disclosure of International Publication No. 2021/167090 is incorporated herein by reference.

(2) adhesive layer B

International Publication No. 2021/167091 by the applicant describes an adhesive layer (which hereinafter may be referred to as "adhesive layer B") which is formed by curing a curable resin in an adhesive composition that includes: a polymer including a copolymer of at least one (meth)acrylate monomer and at least one copolymerizable functional group-containing monomer selected from the group consisting of hydroxyl group-containing copolymerizable monomers, carboxyl group-containing copolymerizable monomers, and nitrogen-containing vinyl monomers; and the curable resin, the adhesive composition having a 23°C initial tensile modulus of elasticity of not less than 0.35 MPa and not more than 8.00 MPa before curing the curable resin in the adhesive composition, and a 23°C initial tensile modulus of elasticity of 1.00 MPa or more after curing the curable resin in the adhesive composition. Because the 23°C initial tensile modulus of elasticity before curing the curable resin in the adhesive composition is 0.35 MPa or more, the adhesive composition is restrained from entering into the plurality of dents at the formation of the adhesive layer **20a,** i.e., when applying the adhesive composition layer on the first principal face **12s** of the optical sheet **10a.** Because the 23°C initial tensile modulus of elasticity of the adhesive composition before curing the curable resin in the adhesive composition is 8.00 MPa or less, the adhesive composition layer has enough softness (ease of deformation) for being applied onto the first principal face **12s** of the optical sheet **10a.** Because the 23°C initial tensile modulus of elasticity after curing the curable resin in the adhesive composition is 1.00 MPa or more, after the adhesive layer **20a** is formed, entry into the plurality of dents through deformation over time of the adhesive layer **20a** is suppressed. The entire disclosure of International Publication No. 2021/167091 is incorporated herein by reference.

The polymer included in the adhesive composition may be, for example, a copolymer, including a copolymer of: at least one (meth)acrylate monomer (e.g., alkyl (meth)acrylate); and at least one copolymerizable functional group-containing monomer selected from the group consisting of hydroxyl group-containing copolymerizable monomers, carboxyl group-containing copolymerizable monomers, and nitrogen-containing vinyl monomers. In the case where the at least one copolymerizable functional group-containing monomer includes a nitrogen-containing vinyl monomer, the mass ratio between the (meth)acrylate monomer and the nitrogen-containing vinyl monomer is e.g. between 95:5 and 50:50, between 95:5 and 55:45, between 95:5 and 60:40, between 90:10 and 50:50, between 90:10 and 55:45, between 90:10 and 60:40, between 85:15 and 50:50, between 85:15 and 55:45, between 85:15 and 60:40, between 80:20 and 50:50, between 80:20 and 55:45, between 80:20 and 60:40, between 75:25 and 50:50, between 75:25 and 55:45, or between 75:25 and 60:40, and preferably between 90:10 and 60:40.

The adhesive layer B is formed by curing a curable resin in an adhesive composition that contains a polymer and the curable resin. Then, with the adhesive composition layer being applied on the first principal face **12s** of the optical sheet **10a,** the curable resin in the adhesive composition is cured by applying heat or radiating active energy rays to the adhesive composition layer. From the standpoint of restraining the adhesive composition layer from entering into the plurality of dents, the curable resin (e.g., a UV-curable resin) preferably has a weight average molecular weight of 4000 or more, for example.

For example, the 23°C initial tensile modulus of elasticity of the adhesive composition before curing the curable resin in the adhesive composition may be e.g. 0.35 MPa or more, 0.40 MPa or more, 0.45 MPa or more, or 0.50 MPa or more, and yet 8.00 MPa or less, 7.70 MPa or less, 7.50 MPa or less, 7.00 MPa or less, 6.50 MPa or less, 6.00 MPa or less, 5.50 MPa or less, 5.00 MPa or less, 4.50 MPa or less, 4.00 MPa or less, 3.50 MPa or less, or 3.00 MPa or less. The 23°C initial tensile modulus of elasticity of the adhesive composition after curing the curable resin in the adhesive composition may be e.g. 1.00 MPa or more, 1.50 MPa or more, 2.00 MPa or more, 2.50 MPa or more, 3.00 MPa or more, 3.50 MPa or more, 4.00 MPa or more, 4.50 MPa or more, or 5.00 MPa or more. Although the upper limit of the 23°C initial tensile modulus of elasticity of the adhesive composition after curing the curable resin in the adhesive composition is not particularly limited, it may be 1000 MPa or less, 800 MPa or less, 600 MPa or less, 400 MPa or less, or 200 MPa or less, for example. It is more preferable that the 23°C initial tensile modulus of elasticity of the adhesive composition before curing the curable resin in the adhesive composition is 0.40 MPa or more and yet 7.70 MPa or less and the 23°C initial tensile modulus of elasticity of the adhesive composition after curing the curable resin in the adhesive composition is 3.00 MPa or more.

The gel fraction before curing the curable resin in the adhesive composition is e.g. 750 or more, and the gel fraction after curing the curable resin in the adhesive composition is e.g. 900 or more. Although the upper limit of the gel fraction is not particularly limited, it may be 100%, for example.

(3) adhesive layer C

Japanese Patent Application No. 2021-025496 by the applicant describes an adhesive layer (which hereinafter may be referred to as "adhesive layer C") which is formed by cross-linking an adhesive composition containing: a polyester resin that is a copolymer of a polycarboxylic acid and a polyalcohol; a cross-linking agent; and at least one cross-linking catalyst selected from the group consisting of an organic zirconium compound, organic iron compound, and an organic aluminum compound, the adhesive layer having a gel fraction of 400 or more after being maintained at a temperature of 85°C and a relative humidity of 85% for 300 hours, and having a 180° peel adhesive strength of 100 mN/20 mm or more with respect to a PMMA film. The adhesive layer C can also suppress change over time at a high temperature and a high humidity. The entire disclosure of Japanese Patent Application No. 2021-025496 is incorporated herein by reference.

As the adhesive forming the adhesive layer A or B, the following adhesives can be suitably used.

The adhesive contains a (meth)acrylic polymer, for example, where the (meth)acrylic polymer is a copolymer of a nitrogen-containing (meth)acrylic monomer and at least one other kind of monomer, for example. The nitrogen-containing (meth)acrylic monomer has a nitrogen-containing cyclic structure, for example. When a (meth)acrylic polymer is prepared by using a nitrogen-containing (meth)acrylic monomer, an effect of improving the elastic property of the (meth)acrylic polymer is obtained especially when the nitrogen-containing (meth)acrylic monomer has a nitrogen-containing cyclic structure.

In the case where the adhesive contains a (meth)acrylic polymer, the (meth)acrylic polymer is preferably cross-linked. In the case where the adhesive contains a (meth)acrylic polymer, the adhesive may further include an active energy ray-curable resin (e.g. a UV-curable resin) and a curing agent (e.g. a photopolymerization initiator), or may further contain a cured material of an active energy ray-curable resin. The active energy rays may be visible light and ultraviolet, for example. By introducing a cross-linked structure into the adhesive, deformation of the adhesive during attachment and its deformation over time are suppressed. In particular, by curing the active energy ray-curable resin after applying the adhesive composition layer (which becomes the adhesive layer **20a**) to the optical sheet **10a,** deformation of the adhesive layer **20a** over time can be suppressed, and the change over time in the degree to which the adhesive layer **20a** penetrates into the dents can be suppressed. When the active energy ray-curable resin is cured, the adhesive layer **20a** becomes hard. If the adhesive layer **20a** is too hard, it may be difficult to attach the adhesive layer **20a** to the optical sheet **10a** by a roll-to-roll method. However, this problem can be avoided if the active energy ray-curable resin is cured after the adhesive composition layer is applied to the optical sheet **10a.**

An adhesive layer **20a** containing a cured material of an active energy ray-curable resin is formed by the following method, for example. First, an adhesive composition solution layer is formed from an adhesive composition solution containing a (meth)acrylic polymer, a cross-linking agent, an active energy ray-curable resin, a polymerization initiator, and a solvent. The adhesive composition solution layer is formed, for example, on a release-treated principal face of a substrate. The solvent in the adhesive composition solution layer is then removed and the (meth)acrylic polymer in the adhesive composition solution layer is cross-linked by the cross-linking agent (e.g., by heating) to obtain an adhesive composition layer having a cross-linked structure. When the adhesive composition solution layer is formed on the release-treated principal face of the substrate, the adhesive composition layer becomes formed on the release-treated principal face of the substrate, whereby a multilayered body having the substrate and the adhesive composition layer is obtained. Now, the cross-linked structure that is formed of the (meth)acrylic polymer and the cross-linking agent will be referred to as the first cross-linked structure. This is to be distinguished from the cross-linked structure formed by curing the active energy ray-curable resin (second cross-linked structure), which will be described later. The polymer in the adhesive composition solution layer may be cross-linked in the step of removing the solvent in the adhesive composition solution layer; or, a further step of cross-linking the polymer in the adhesive composition solution layer may be performed after and separately from the step of removing the solvent in the adhesive composition solution layer. Thereafter, the adhesive composition layer is attached onto the first principal face **12s** of the optical sheet **10a,** and with the adhesive composition layer placed on the first principal face **12s** of the optical sheet **10a,** the adhesive composition layer is irradiated with active energy rays to cure the active energy ray-curable resin, whereby the adhesive layer **20a** having the second cross-linked structure in addition to the first cross-linked structure can be formed. The first cross-linked structure and the second cross-linked structure possessed by the adhesive layer **20a** can be considered as forming a so-called interpenetrating polymer network structure (IPN).

An adhesive layer **20a** that does not contain a cured material of an active energy ray-curable resin is formed by the following method, for example. First, an adhesive composition solution layer is formed from an adhesive composition solution containing a polymer, a cross-linking agent and a solvent. This adhesive composition solution contains neither an active energy ray-curable resin nor a polymerization initiator. The adhesive composition solution layer is formed, for example, on the release-treated principal face of the substrate. The solvent in the adhesive composition solution layer is then removed and the polymer in the adhesive composition solution layer is cross-linked with a cross-linking agent (e.g., by heating) to obtain an adhesive layer **20a** having a cross-linked structure. When the adhesive composition solution layer is formed on the release-treated principal face of the substrate, the adhesive layer becomes formed on the release-treated principal face of the substrate, whereby a multilayered body having a substrate and an adhesive layer is obtained. The polymer in the adhesive composition solution layer may be cross-linked in the step of removing the solvent in the adhesive composition solution layer; or, a further step of cross-linking the polymer in the adhesive composition solution layer may be performed after and separately from the step of removing the solvent in the adhesive composition solution layer.

Preferably, the adhesives does not contain any graft polymer. When formed from an adhesive composition containing graft polymers, as in the adhesive layer described in Patent Document 1, there are many design and control factors for the material, which may result in less mass producibility. Adhesives containing no graft polymer can have their creep characteristics adjusted by various factors (e.g., type and amount of cross-linking agent, type and amount of active ray-curable resin).

Suitable specific examples of the adhesive are described below.

The adhesive includes a (meth)acrylic polymer, for example. Without particular limitation, any (meth)acrylate can be used as a monomer for producing the (meth) acrylic polymer. For example, an alkyl (meth)acrylate having an alkyl group with 4 or more carbon atoms can be used. In this case, the ratio of the alkyl (meth)acrylate having an alkyl group with 4 or more carbon atoms to the total amount of monomer used in the production of the (meth)acrylic polymer is, for example, 50 mass% or more.

In the present specification, "alkyl (meth)acrylate" refers to any (meth)acrylate having straight or branched-chain alkyl groups. The number of carbon atoms in the alkyl group possessed by the alkyl (meth)acrylate is preferably 4 or more, and more preferably 4 or more and yet 9 or less. Note that (meth)acrylate refers to acrylates and/or methacrylates.

Specific examples of alkyl (meth)acrylates include n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, isostearyl (meth)acrylate, and the like. These can be used alone or in combination.

The adhesive may include a (meth)acrylic polymer that is a copolymer of a nitrogen-containing (meth)acrylic monomer and at least one other kind of monomer. In this case, the (meth)acrylic polymer is preferably a copolymer obtained by copolymerizing the following monomers in the following amounts, when the total amount of monomers used for copolymerization is 100 mass parts.

Nitrogen-containing (meth)acrylic monomer: 10.0 mass parts or more, 15.0 mass parts or more, 20.0 mass parts or more, 25.0 mass parts or more, 30.0 mass parts or more, or 35.0 mass parts or more, and yet 40.0 mass parts or less, 35.0 mass parts or less, 30.0 mass parts or less, 25.0 mass parts or less, 20.0 mass parts or less, or 15.0 mass parts or less. For example, 10.0 mass parts or more and yet 40.0 mass parts or less.

Hydroxyl group-containing acrylic monomer: 0.05 mass parts or more, 0.75 mass parts or more, 1.0 mass part or more, 2.0 mass parts or more, 3.0 mass parts or more, 4.0 mass parts or more, 5.0 mass parts or more, 6.0 mass parts or more, 7.0 mass parts or more, 8.0 mass parts or more, or 9.0 mass parts or more, and yet 10.0 mass parts or less, 9.0 mass parts or less, 8.0 mass parts or less, 7.0 mass parts or less, 6.0 mass parts or less, 5.0 mass parts or less, 4.0 mass parts or less, 3.0 mass parts or less, 2.0 mass parts or less, or 1.0 mass part or less. For example, 0.05 mass parts or more and yet 10.0 mass parts or less.

Carboxyl group-containing acrylic monomer: 1.0 mass part or more, 2.0 mass parts or more, 3.0 mass parts or more, 4.0 mass parts or more, 5.0 mass parts or more, 6.0 mass parts or more, 7.0 mass parts or more, 8.0 mass parts or more, or 9.0 mass parts or more, and yet 10.0 mass parts or less, 9.0 mass parts or less, 8.0 mass parts or less, 7.0 mass parts or less, 6.0 mass parts or less, 5.0 mass parts or less, 4.0 mass parts or less, 3.0 mass parts or less, or 2.0 mass parts or less. For example, 1.0 mass part or more and yet 10.0 mass parts or less.

Alkyl (meth)acrylate monomer: (100 mass parts)-(total amount of monomers other than alkyl (meth)acrylate monomer that are used for copolymerization). In the present specification, a "nitrogen-containing (meth)acrylic monomer" includes, without particular limitation, monomers which include a polymerizable functional group having an unsaturated double bond of (meth)acryloyl groups, and which include a nitrogen atom. A "nitrogen-containing (meth)acrylic monomer" has a nitrogen-containing cyclic structure, for example. Examples of nitrogen-containing (meth)acrylic monomers having a nitrogen-containing cyclic structure are N-vinyl-2-pyrrolidone (NVP), N-vinyl-ε-caprolactam (NVC), and 4-acryloyl morpholine (ACMO). These can be used alone or in combination.

In the present specification, a "hydroxyl group-containing acrylic monomer" includes, without particular limitation, monomers which include a polymerizable functional group having an unsaturated double bond of (meth)acryloyl groups, and which include a hydroxyl group. Examples thereof include: hydroxyalkyl (meth)acrylates, such as 2-hydroxybutyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, 8-hydroxyoctyl(meth)acrylate, 10-hydroxydecyl (meth)acrylate, and 12-hydroxylauryl (meth)acrylate; 4-hydroxymethylcyclohexyl (meth)acrylate, 4-hydroxybutyl vinyl ether, and the like.

In the present specification, a "carboxyl group-containing acrylic monomer" includes, without particular limitation, monomers which include a polymerizable functional group having an unsaturated double bond of (meth)acryloyl groups or vinyl groups, etc., and which include a carboxyl group. Examples of unsaturated carboxylic acid-containing monomers are (meth)acrylic acid, carboxyethyl (meth)acrylate, carboxypentyl (meth)acrylate, itaconic acid, maleic acid, fumaric acid, crotonic acid, and the like. These can be used alone or in combination.

The adhesive may contain a (meth)acrylic polymer that is a copolymer of a carboxyl group-containing acrylic monomer and at least one other kind of monomer (except for nitrogen-containing (meth)acrylic monomers). In this case, the (meth)acrylic polymer is preferably a copolymer obtained by copolymerizing the following monomers in the following amounts, when the total amount of monomers used for copolymerization is 100 mass parts.

Carboxyl group-containing acrylic monomer: 1.0 mass part or more, 2.0 mass parts or more, 3.0 mass parts or more, 4.0 mass parts or more, 5.0 mass parts or more, 6.0 mass parts or more, 7.0 mass parts or more, 8.0 mass parts or more, or 9.0 mass parts or more, and yet 10.0 mass parts or less, 9.0 mass parts or less, 8.0 mass parts or less, 7.0 mass parts or less, 6.0 mass parts or less, 5.0 mass parts or less, 4.0 mass parts or less, 3.0 mass parts or less, or 2.0 mass parts or less. For example, 1.0 mass part or more and yet 10.0 mass parts or less.

Alkyl (meth)acrylate monomer: 90.0 mass parts or more, 91.0 mass parts or more, 92.0 mass parts or more, 93.0 mass parts or more, 94.0 mass parts or more, 95.0 mass parts or more, 96.0 mass parts or more, 97.0 mass parts or more, or 98.0 mass parts or more, and yet 99.0 mass parts or less, 98.0 mass parts or less, 97.0 mass parts or less, 96.0 mass parts or less, 95.0 mass parts or less, 94.0 mass parts or less, 93.0 mass parts or less, 92.0 mass parts or less, or 91.0 mass parts or less. For example, 90.0 mass parts or more and yet 99.0 mass parts or less.

Cross-linking agents for introducing a cross-linked structure to a (meth)acrylic polymer include cross-linking agents such as isocyanate-based cross-linking agents, epoxy-based cross-linking agents, silicone-based cross-linking agents, oxazoline-based cross-linking agents, aziridine-based cross-linking agents, silane-based cross-linking agents, alkyl-etherated melamine-based cross-linking agents, metal chelate-based cross-linking agents, and peroxides. Each cross-linking agent may be alone or two or more kinds may be used in combination.

An isocyanate-based cross-linking agent is meant to be a compound that includes two or more isocyanate groups (including isocyanate regenerative functional groups in which the isocyanate group is temporarily protected with a blocking agent or through oligomerization, etc.) within one molecule.

Isocyanate-based cross-linking agents include: aromatic isocyanates such as tolylene diisocyanate and xylene diisocyanate; alicyclic isocyanates such as isophorone diisocyanate; aliphatic isocyanates such as hexamethylene diisocyanate; and the like.

More specifically, examples may be: lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenylisocyanate; isocyanate adducts such as trimethylolpropane/tolylene diisocyanate trimer adduct (manufactured by Tosoh Corporation, product name: Coronate L), trimethylolpropane/hexamethylene diisocyanate trimer adduct (manufactured by Tosoh Corporation, product name: Coronate HL), isocyanurate of hexamethylene diisocyanate (manufactured by Tosoh Corporation, product name: Coronate HX); trimethylolpropane adduct of xylylene diisocyanate (manufactured by Mitsui Chemicals, Inc., product name: D110N), trimethylolpropane adduct of hexamethylene diisocyanate (manufactured by Mitsui Chemicals, Inc., product name: D160N); polyether polyisocyanate, polyester polyisocyanate, and adducts of these with various polyols, polyisocyanates polyfunctionalized with isocyanurate bonds, biuret bonds, allophanate bonds, or the like, and so on.

Each isocyanate-based cross-linking agent may be used alone, or two or more of them may be used in a mixture. The blended amount of the isocyanate-based cross-linking agent(s) is, with respect to 100 mass parts of a (meth)acrylic polymer, e.g. 0.01 mass parts or more, 0.02 mass parts or more, 0.05 mass parts or more, or 0.1 mass parts or more, and yet 10 mass parts or less, 9 mass parts or less, 8 mass parts or less, 7 mass parts or less, 6 mass parts or less, or 5 mass parts or less, and preferably, 0.01 mass parts or more and yet 10 mass parts or less, 0.02 mass parts or more and yet 9 mass parts or less, or 0.05 mass parts or more and yet 8 mass parts or less. The blended amount may be adjusted appropriately in consideration of cohesion, inhibition of peeling in durability tests, and other factors.

In an aqueous dispersion solution of a modified (meth)acrylic polymer prepared by emulsion polymerization, it is not necessary to use an isocyanate-based cross-linking agent; if necessary, however, a blocked isocyanate-based cross-linking agent can be used because it reacts easily with water.

An epoxy-based cross-linking agent is a polyfunctional epoxy compound having two or more epoxy groups within one molecule. Examples of epoxy-based cross-linking agents are: bisphenol A, epichlorohydrin-type epoxy-based resins, ethylene glycidyl ether, N,N,N',N'-tetraglycidyl-m-xylenediamine, diglycidylaniline, diamine glycidylamine, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, glycerin diglycidyl ether, glycerin triglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcinol diglycidyl ether, and bisphenol-S-diglycidyl ether, as well as epoxy-based resins having two or more epoxy groups within the molecule, etc. As epoxy-based cross-linking agents, for example, those manufactured by Mitsubishi Gas Chemical Company, Inc., product names: "Tetrad C", "Tetrad X", etc., can be used.

Each epoxy-based cross-linking agent may be used alone, or two or more of them may be used in a mixture. The blended amount of the epoxy-based cross-linking agent(s) is, with respect to 100 mass parts of a (meth)acrylic polymer, e.g. 0.01 mass parts or more, 0.02 mass parts or more, 0.05 mass parts or more, or 0.1 mass parts or more, and yet 10 mass parts or less, 9 mass parts or less, 8 mass parts or less, 7 mass parts or less, 6 mass parts or less, or 5 mass parts or less, and preferably, 0.01 mass parts or more and yet 10 mass parts or less, 0.02 mass parts or more and yet 9 mass parts or less, or 0.05 mass parts or more and yet 8 mass parts or less.
The blended amount may be adjusted appropriately in consideration of cohesion, inhibition of peeling in durability tests, and so on.

As a peroxide cross-linking agent, those which generate radical active species upon heating and promote cross-linking of the base polymer of the tackiness agent can be used as appropriate; in consideration of workability and stability, however, peroxides having a 1 minute half-life temperature of not less than 80°C and not more than 160°C are preferably used, and peroxides having a 1 minute half-life temperature of not less than 90°C and not more than 140°C are more preferably used.

As the peroxide, for example, di(2-ethylhexyl)peroxydicarbonate (1 minute half-life temperature: 90.6°C), di(4-t-butylcyclohexyl)peroxydicarbonate (1 minute half-life temperature: 92.1°C), di-sec-butylperoxydicarbonate (1 minute half-life temperature: 92.4°C), t-butyl peroxyneodecanoate (1 minute half-life temperature: 103.5°C), t-hexylperoxypivalate (1 minute half-life temperature: 109.1°C), t-butylperoxypivalate (1 minute half-life temperature: 110.3°C), dilauroyl peroxide (1 minute half-life temperature: 116.4°C), di-n-octanoyl peroxide (1 minute half-life temperature: 117.4°C), 1,1,3,3-tetramethylbutylperoxy-2-ethylhexanoate (1 minute half-life temperature: 124.3°C), di(4-methylbenzoyl)peroxide (1 minute half-life temperature: 128.2°C), dibenzoyl peroxide (1 minute half-life temperature: 130.0°C), t-butyl peroxyisobutylate (1 minute half-life temperature: 136.1°C), 1,1-di(t-hexylperoxy) cyclohexane (1 minute half-life temperature: 149.2°C), and the like. Among others, di(4-t-butylcyclohexyl)peroxydicarbonate (1 minute half-life temperature: 92.1°C), dilauroyl peroxide (1 minute half-life temperature: 116.4°C), dibenzoyl peroxide (1 minute half-life temperature: 130.0°C), and the like are preferably used because of their particularly outstanding cross-linking reaction efficiencies.

The half-life of a peroxide is an index of the decomposition rate of the peroxide, and refers to the time required for the remaining amount of peroxide to be reduced to half. The decomposition temperature for achieving a half-life in a given period of time, and the half-life time at a given temperature, are described in manufacturers' catalogs, for example, "Organic Peroxides Catalog 9th Edition (May 2003)" by NOF CORPORATION.

Each peroxide may be used alone, or two or more of them may be used in a mixture. The blended amount of the peroxide is, with respect to 100 mass parts of a (meth)acrylic polymer, 0.02 mass parts or more and yet 2 mass parts or less, and preferably 0.05 mass parts or more and yet 1 mass part or less. It is to be appropriately adjusted within this range for adjusting processibility, reworkability, cross-linking stability, and releasability.

The amount of decomposition of the peroxide remaining after the reaction treatment can be measured by HPLC (high performance liquid chromatography) or other methods, for example.

More specifically, for example, the tackiness agent after the reaction treatment may be taken in about 0.2 g aliquots, immersed in 10 ml of ethyl acetate and extracted by shaking for 3 hours at 120 rpm under 25°C in a shaking machine, and left at room temperature for 3 days. Then, 10 ml of acetonitrile may be added, and a liquid extract obtained by shaking at 120 rpm for 30 minutes at 25°C and filtered through a membrane filter (0.45 μm) may be injected in HPLC, and analyzed to determine the amount of peroxide after the reaction treatment.

Organic cross-linking agents and polyfunctional metal chelates may also be used as cross-linking agents. A polyfunctional metal chelate is a polyvalent metal covalently or coordinately bonded to an organic compound. The polyvalent metal atoms include Al, Cr, Zr, Co, Cu, Fe, Ni, V, Zn, In, Ca, Mg, Mn, Y, Ce, Sr, Ba, Mo, La, Sn, Ti, and so on. Examples of atoms in the organic compound to which to covalently or coordinately bonded are oxygen atoms; and examples of organic compounds are alkyl esters, alcohol compounds, carboxylic acid compounds, ether compounds, and ketone compounds.

The blended amount of active energy ray-curable resin is e.g. 3 mass parts or more and yet 60 mass parts or less with respect to 100 mass parts of a (meth) acrylic polymer. The weight average molecular weight (Mw) before curing is not less than 4000 and not more than 50000. For example, acrylate-based, epoxy-based, urethane-based, or en-thiol-based UV-curable resins can be suitably used as the active energy ray-curable resin.

As the active energy ray-curable resin, monomers and/or oligomers that undergo radical polymerization or cationic polymerization with active energy rays are used.

Examples of monomers that undergo radical polymerization by active energy rays are monomers having unsaturated double bonds such as (meth)acryloyl groups and vinyl groups, and monomers having (meth)acryloyl groups are especially preferably used due to their good reactivity.

Specific examples of monomers having (meth)acryloyl groups are allyl (meth)acrylate, caprolactone (meth)acrylate, cyclohexyl (meth)acrylate, N,N-diethylaminoethyl (meth)acrylate, 2-ethylhexyl (meth)acrylate, heptadecafluorodecyl (meth)acrylate, glycidyl (meth)acrylate, caprolactone modified 2-hydroxylethyl (meth)acrylate, isobornyl (meth)acrylate, morpholine (meth)acrylate, (meth)acrylate, phenoxy ethyl (meth)acrylate, tripropylene glycol di(meth)acrylate, bisphenol A diglycidyl ether di(meth)acrylate, neopentyl glycol hydroxypivalate di(meth)acrylate, trimethylolpropane tri(meth)acrylate, trimethylolpropane ethoxy tri(meth)acrylate, pentaerythritol tri(meth)acrylate, pentaerythritol tetra(meth)acrylate, dipentaerythritol penta(meth)acrylate, dipentaerythritol hexa(meth)acrylate, caprolactone modified dipentaerythritol hexa (meth)acrylate, and the like.

As oligomers to undergo radical polymerization by active energy rays, polyester (meth)acrylate, epoxy (meth)acrylate, urethane (meth)acrylate, etc., to which two or more unsaturated double bonds, such as (meth)acryloyl groups or vinyl groups, are added as functional groups similar to those of monomers to the polyester, epoxy, urethane, etc. skeleton, are used.

Polyester (meth)acrylate is obtained by allowing a polyester with a terminal hydroxyl group obtained from a polyalcohol and a polycarboxylic acid to react with (meth)acrylic acid. Specific examples include the Aronix M-6000, 7000, 8000, and 9000 series manufactured by TOAGOSEI CO., LTD.

Epoxy (meth)acrylate is obtained by allowing an epoxy resin to react with (meth)acrylic acid. Specific examples are Ripoxy SP, VR series manufacture by Showa Polymer Co. and Epoxy Ester series manufactured by Kyoeisha Chemical Co.

Urethane (meth)acrylate is obtained by allowing polyol, isocyanate, and hydroxy (meth)acrylate to react. Specific examples are Artresin UN series made by Negami Chemical Industrial Co., Ltd., Shin Nakamura Chemical Co. NK Oligo U series, Shikoh UV series made by Mitsubishi Chemical Corporation, and others.

Through ultraviolet irradiation, a photopolymerization initiator is excited and activated to generate radicals, and acts to cure polyfunctional oligomers via radical polymerization. Examples are: acetophenone-based photopolymerization initiators, such as 4-phenoxydichloroacetophenone, 4-t-butyldichloroacetophenone, diethoxyacetophenone, 2-hydroxy-2-methyl-1-phenylpropane-1-one, 1-(4-isopropylphenyl)-2-hydroxy-2-methylpropane-1-one, 1-(4-dodecylphenyl)-2-hydroxy-2-methylpropane-1-one, 4-(2-hydroxyethoxy)phenyl (2-hydroxy-2-propyl)ketone, and 1-hydroxycyclohexylphenyl ketone, 2-methyl-1-[4-(methylthio)phenyl]-2-morpholinopropane-1; benzoin-based photopolymerization initiators, such as benzoin, benzoin methyl ether, benzoin ethyl ether, benzoin isopropyl ether, benzoin isobutyl ether, and 2,2-dimethoxy-2-phenylacetophenone; benzophenone-based photopolymerization initiators, such as benzophenone, benzoyl benzoate, methyl benzoyl benzoate, 4-phenyl benzophenone, hydroxy benzophenone, 4-benzoyl-4'-methyldiphenylsulfide, and 3,3'-dimethyl-4-methoxybenzophenone; thioxanthone-based photopolymerization initiators, such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone; and specialized photopolymerization initiators, such as $\alpha$-acyloxime esters, acylphosphine oxide, methylphenylglyoxylate, benzyl, camphorquinone, dibenzosuberone, and 2-ethylanthraquinone, 4',4"-diethylisophthalophenone. As the photopolymerization initiator, cationic photopolymerization initiators can also be used, such as allylsulfonium hexafluorophosphate salts, sulfonium hexafluorophosphate salts, and bix(alkylphenyl) iodonium hexafluorophosphate.

Two or more of the above photopolymerization initiators can be used in combination. The polymerization initiator is usually blended in the range of 0.5 mass parts or more and yet 30 mass parts or less, and preferably in the range of 1 mass part or more and yet 20 mass parts or less, for 100 mass parts of the above active energy ray-curable resin. If less than 0.5 mass parts, polymerization does not progress sufficiently and the rate of curing may become slow; if more than 30 mass parts, the hardness of the cured sheet may decrease, or other problems may occur.

Active energy rays are not particularly limited, but preferably are ultraviolet, visible light, and electron beams. Cross-linking treatment by UV irradiation can be performed using an appropriate ultraviolet source such as high-pressure mercury lamps, low-pressure mercury lamps, excimer lasers, metal halide lamps, and LED lamps. The ultraviolet irradiation dose can be selected according to the required degree of cross-linking, but usually, in the case of ultraviolet, it is desirably chosen in the range of not less than 0.2 J/cm$^2$ and not more than 10 J/cm$^2$. The temperature during irradiation is not particularly limited, but it is preferably up to about 140°C in terms of heat resistance of the supporting body.

When the adhesive contains a polyester-based polymer instead of or in addition to a (meth)acrylic polymer, the polyester-based polymer preferably has the following characteristics, for example.

Types of carboxylic acid component (or skeletal features, etc.): containing dicarboxylic acid including at least two carboxyl groups, specifically, dicarboxylic acids, where examples of the dicarboxylic acid are, although not particularly limited, dimer acids which are derived from sebacic acid, oleic acid, erucic acid, or the like. Other examples are glutaric acid, suberic acid, adipic acid, azelaic acid, 1,4-cyclohexane dicarboxylic acid, 4-methyl-1,2-cyclohexane dicarboxylic acid, dodecenylsuccinic anhydride, fumaric acid, succinic acid, dodecanedioic acid, hexahydrophthalic anhydride, tetrahydrophthalic anhydride, maleic acid, maleic anhydride, itaconic acid, citraconic acid, or other aliphatic or alicyclic dicarboxylic acids, terephthalic acid, isophthalic acid, orthophthalic acid, 1,5-naphthalene dicarboxylic acid, 2,6-naphthalene dicarboxylic acid, 4,4'-diphenyldicarboxylic acid, 2,2'-diphenyldicarboxylic acid, and 4,4'-diphenyl ether dicarboxylic acid. In addition to the aforementioned dicarboxylic acids, tricarboxylic acids containing three or more carboxyl groups can also be used.

Type of diol component (or skeletal features, etc.): containing those including at least two hydroxyl groups within the molecule, specifically, diols. Dimer diols derived from fatty esters, oleic acid, erucic acid, etc., glycerol monostearate, or the like. Other examples are: aliphatic glycols such as ethylene glycol, and 1,2-propylene glycol; and, among non-aliphatic glycols, ethylene oxide adducts and propylene oxide adducts of bisphenol A, ethylene oxide adducts and propylene oxide adducts of hydrogenated bisphenol A.

As cross-linking agents for introducing a cross-linked structure to a polyester-based polymer, isocyanate-based cross-linking agents, oxazoline-based cross-linking agents, aziridine-based cross-linking agents, silane-based cross-linking agents, alkyl-etherated melamine-based cross-linking agents, and metal chelate-based cross-linking agents can be used. Their blended amount is e.g. 2.0 mass parts or more and yet 10.0 mass parts or less with respect to 100 mass parts of a polyester-based polymer.

Specific examples of the composition of adhesive layer C are described below.

<polycarboxylic acid>

Examples of polycarboxylic acids include:

aromatic dicarboxylic acids, such as terephthalic acid, isophthalic acid, benzylmalonic acid, diphenic acid, 4,4'-oxydibenzoic acid, and naphthalene dicarboxylic acid;
aliphatic dicarboxylic acids, such as malonic acid, dimethyl malonic acid, succinic acid, glutaric acid, adipic acid, trimethyl adipic acid, pimelic acid, 2,2-dimethyl glutaric acid, azelaic acid, sebacic acid, fumaric acid, maleic acid, itaconic acid, thiodipropionic acid, and diglycolic acid; and
alicyclic dicarboxylic acids, such as 1,3-cyclopentane dicarboxylic acid, 1,2-cyclohexane dicarboxylic acid, 1,3-cyclopentane dicarboxylic acid, 1,4-cyclohexane dicarboxylic acid, 2,5-norbornane dicarboxylic acid, and adamantane dicarboxylic acid.

These may be used each alone, or two or more of them may be used in combination.

Among others, from the standpoint of conferring cohesion, they preferably contain aromatic dicarboxylic acids, and especially preferably contain terephthalic acid or isophthalic acid.

<polyalcohol>

Examples of polyalcohols include:

aliphatic diols, such as ethylene glycol, diethylene glycol, triethylene glycol, propylene glycol, dipropylene glycol, 1,3-propanediol, 2,4-dimethyl-2-ethylhexane-1,3-diol, 2-methyl-1,3-propanediol, 2,2-dimethyl-1,3-propanediol(neopentylglycol), 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 3-methyl-1,5-pentanediol, 2,2,4-trimethyl-1,6-hexanediol, and polytetramethylene glycol;
alicyclic diols, such as 1,2-cyclohexane dimethanol, 1,3-cyclohexane dimethanol, 1,4-cyclohexane dimethanol, spiroglycol, tricyclodecane dimethanol, adamantane diol, and 2,2,4,4-tetramethyl-1,3-cyclobutanediol; and
aromatic diols, such as 4,4'-thiodiphenol, 4,4'-methylenediphenol, 4,4'-dihydroxybiphenyl, o-, m- and p-dihydroxybenzenes, 2,5-naphthalene diol, p-xylene diol, and ethylene oxides thereof, and propylene oxide adducts.

These may be used each alone, or two or more of them may be used in combination.

Among others, they preferably contain aliphatic diols or alicyclic diols, and more preferably polytetramethylene glycol, neopentylglycol, or cyclohexane dimethanol.

<cross-linking agent>

As the cross-linking agent, without any particular limitation, those which are known can be used, e.g., polyvalent isocyanurates, polyfunctional isocyanates, polyfunctional melamine compounds, polyfunctional epoxy compounds, polyfunctional oxazoline compounds, polyfunctional aziridine compounds, and metal chelate compounds. In particular, from the standpoints of transparency of the resultant adhesive layer and achieving an elastic modulus that is suitable as an adhesive layer, an isocyanate-based cross-linking agent is preferably used.

An isocyanate-based cross-linking agent is meant to be a compound that includes two or more isocyanate groups (including isocyanate regenerative functional groups in which the isocyanate group is temporarily protected with a blocking agent or through oligomerization, etc.) within one molecule.

Isocyanate-based cross-linking agents include: aromatic isocyanates such as tolylene diisocyanate and xylene diisocyanate; alicyclic isocyanates such as isophorone diisocyanate; aliphatic isocyanates such as hexamethylene diisocyanate; and the like.

More specifically, examples may be: lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenylisocyanate; isocyanate adducts such as trimethylolpropane/tolylene diisocyanate trimer adduct (manufactured by Tosoh Corporation, product name: Coronate L), trimethylolpropane/hexamethylene diisocyanate trimer adduct (manufactured by Tosoh Corporation, product name: Coronate HL), isocyanurate of hexamethylene diisocyanate (manufactured by Tosoh Corporation, product name: Coronate HX); trimethylolpropane adduct of xylylene diisocyanate (manufactured by Mitsui Chemicals, Inc., product name: D110N), trimethylolpropane adduct of hexamethylene diisocyanate (manufactured by Mitsui Chemicals, Inc., product name: D160N); polyether polyisocyanate, polyester polyisocyanate, and adducts of these with various polyols, polyisocyanates polyfunctionalized with isocyanurate bonds, biuret bonds, allophanate bonds, or the like, and so on. Use of aliphatic isocyanates is more preferable because an adhesive layer having a high gel fraction can be obtained with a small amount of cross-linking agent.

Each isocyanate-based cross-linking agent may be used alone, or two or more of them may be used in a mixture. The lower limit of the blended amount of the isocyanate-based cross-linking agent is, with respect to 100 mass parts of polyester resin, 6 mass parts or more, preferably 7 mass parts or more, 8 mass parts or more, 9 mass parts or more, or 10 mass parts or more, whereas the upper limit of the blended amount of the isocyanate-based cross-linking agent is 20 mass parts or less, and preferably 15 mass parts or less. These ranges allow for restraining the adhesive layer from penetrating into the dents of the concavo-convex structure over time, while providing a good adhesive strength with respect to a surface having a concavo-convex structure.

<cross-linking catalyst>

Examples of organic aluminum compounds include aluminum trisacetylacetonate, and aluminum trisethylacetoacetate, diisopropoxyaluminum ethylacetoacetate.

Examples of organic iron compounds include acetylacetone-iron complexes.

Examples of organic zirconium compounds include zirconium tetraacetylacetonate.

These may be used each alone, or two or more of them may be used in combination as necessary.

Use of a cross-linking catalyst can increase the cross-linking rate and reduce the production lead time.

As the method of forming adhesive layer C, known methods can be adopted. For example, the following method is possible. First, an adhesive composition (or a solution containing an adhesive composition) is introduced (applied) onto a supporting body (substrate), and dried as necessary, thereby forming an adhesive composition layer. Typically, an adhesive composition solution containing a polyester resin, a cross-linking agent, a cross-linking catalyst, and a solvent is applied onto the substrate, thereby forming an adhesive composition solution layer on the substrate; and then the solvent in the adhesive composition solution layer is removed to obtain an adhesive composition layer. Next, the adhesive composition layer is subjected to a cross-linking treatment (e.g., a heat treatment), thereby allowing the polyester resin in the adhesive composition layer to be cross-linked by the cross-linking agent, whereby an adhesive layer having a cross-linked structure is formed. In this manner, the adhesive layer is formed on the substrate, whereby a multilayered body having the substrate and the adhesive layer is obtained. As the substrate, for example, a substrate having release-treated principal face, e.g., a release liner, may be used. An adhesive layer that is formed on a release liner by the aforementioned method may be moved (transferred) onto a supporting body (or another release liner). Known methods can be adopted as the method of applying the adhesive composition (adhesive composition solution) onto the substrate. Examples thereof include roll coating, gravure coating, reverse roll coating, roll brush coating, air knife coating, spray coating, extrusion coating with a die coater, and so on.

[Examples of preferable configurations of lightguide layer, optical sheet, substrate layer, and low-refractive index layer]

Preferable examples of component elements of an illumination device according to an embodiment of the present invention will be described.

The lightguide layer **80** may be made of a known material having a high transmittance with respect to visible light. The lightguide layer **80** is made of an acrylic resin such as polymethyl methacrylate (PMMA), a polycarbonate (PC)-based resin, a cycloolefin-based resin, or glass (e.g., quartz glass, non-alkaline glass, borosilicate glass), for example. The refractive index $n_{GP}$ of the lightguide layer **80** is e.g. not less than 1.40 and not more than 1.80. Unless otherwise specified, the refractive index refers to a refractive index that is measured with an ellipsometer at a wavelength of 550 nm. The thickness of the lightguide layer **80** can be appropriately set depending on the application. The thickness of the lightguide layer **80** is e.g. not less than 0.05 mm and not more than 50 mm.

The first optical sheet **10a** can be produced by a method described in Japanese National Phase PCT Laid-Open Publication No. 2013-524288, for example. Specifically, for example, the surface of a polymethyl methacrylate (PMMA) film was coated with a lacquer (e.g., manufactured by Sanyo Chemical Co., FINECURE RM-64: an acrylate photocurable resin); an optical pattern was embossed on the film surface including the lacquer; and thereafter the lacquer was cured (e.g., ultraviolet irradiation condition: D bulb, 1000 mJ/cm$^2$, 320 mW/cm$^2$) to produce the first optical sheet **10a.**

The material of the second optical sheet **30** may for example be a light-transmitting thermoplastic resin, and more specifically a film made of a (meth) acrylic resin such as polymethyl methacrylate (PMMA), or a polycarbonate (PC)-based resin or the like. Depending on the purpose, any suitable material may be adopted for the second optical sheet **30.**

The thickness of the substrate layer is e.g. not less than 1 μm and not more than 1000 μm, preferably not less than 10 μm and not more than 100 μm, and still more preferably not less than 20 μm and not more than 80 μm. The refractive index of the substrate layer is preferably not less than 1.40 and not more than 1.70, and still more preferably not less than 1.43 and not more than 1.65.

The refractive index $n_{L1}$ of the low-refractive index layer is, each independently, preferably e.g. 1.30 or less, more preferably 1.20 or less, and still more preferably 1.15 or less. The low-refractive index layer is preferably a solid, preferably having a refractive index of e.g. 1.05 or more. The difference between the refractive index of the lightguide layer **80** and the refractive index of the low-refractive index layer is preferably 0.20 or more, more preferably 0.23 or more, and still more preferably 0.25 or more. A low-refractive index layer having a refractive index of 1.30 or less can be formed by using a porous material, for example. The thickness of the low-refractive index layer is, each independently, e.g. not less than 0.3 μm and not more than 5 μm.

When the low-refractive index layer is a porous material with internal voids, its porosity is preferably 35 volume% or more, more preferably 38 volume% or more, and especially preferably 40 volume% or more. Within such ranges, a low-refractive index layer having a particularly low refractive index can be formed. The upper limit of the porosity of the low-refractive index layer is e.g. 90 volume% or less, and preferably 75 volume% or less. Within such ranges, a low-refractive index layer with good strength can be formed. The porosity is a value that is calculated according to Lorentz-Lorenz's formula from a value of the refractive index measured with an ellipsometer.

As the low-refractive index layer, for example, a low-refractive index layer with voids as disclosed in International Publication No. 2019/146628 can be used. The entire disclosure of International Publication No. 2019/146628 is incorporated herein by reference. Specifically, low-refractive index layers with voids include: essentially spherical particles such as silica particles, silica particles having micropores, and silica hollow nanoparticles; fibrous particles such as cellulose nanofibers, alumina nanofibers, and silica nanofibers; and flat-plate particles such as nanoclay composed of bentonite. In one embodiment, the low-refractive index layer with voids is a porous material composed of particles (e.g., micropored particles) that are chemically bonded directly to one another. The particles composing the low-refractive index layer with voids may be at least partially bonded to one another via a small amount (e.g., less than the mass of the particles) of a binder component. The porosity and refractive index of the low-refractive index layer can be adjusted based on the particle size, particle size distribution, and the like of the particles composing the low-refractive index layer.

Examples of methods of obtaining a low-refractive index layer with voids include methods that are described in Japanese Laid-Open Patent Publication No. 2010-189212, Japanese Laid-Open Patent Publication No. 2008-040171, Japanese Laid-Open Patent Publication No. 2006-011175, International Publication No. 2004/113966, and references thereof. The entire disclosure of Japanese Laid-Open Patent Publication No. 2010-189212, Japanese Laid-Open Patent Publication No. 2008-040171, Japanese Laid-Open Patent Publication No. 2006-011175, International Publication No. 2004/113966 is incorporated herein by reference.

As the low-refractive index layer with voids, porous silica can be suitably used. Porous silica can be produced by the following method, for example: a method involving hydrolyzing and polycondensing at least one of silicon compounds, hydrolyzable silanes and/or silsesquioxanes, and their partial hydrolysates and dehydration-condensation products; a method that uses porous particles and/or hollow microparticles; and a method that generates an aerogel layer using the springback phenomenon, a method of pulverizing a gelatinous silicon compound obtained by sol-gel processing and using a pulverized gel in which micropored particles as the resultant pulverized body are chemically bonded to one another with a catalyst or the like; and so on. However, the low-refractive index layer is not limited to porous silica, and the production method is not limited to the exemplified production methods; any production method may be used for production. Silsesquioxane is a silicon compound with ($RSiO_{1.5}$; where R is a hydrocarbon group) as the basic structural unit. Although silsesquioxane is not exactly the same as silica, whose basic structural unit is $SiO_2$, it has a network structure cross-linked by siloxane bonds, similarly to silica. Therefore, any porous material that contains silsesquioxane as its basic structural unit is also referred to as porous silica or silica-based porous material.

Porous silica may be composed of micropored particles of a gelatinous silicon compound that are bonded to one another. An example of micropored particles of a gelatinous silicon compound is a pulverized body of the gelatinous silicon compound. Porous silica may be formed by coating a base with a coating solution that contains a pulverized body of a gelatinous silicon compound, for example. The pulverized body of the gelatinous silicon compound may chemically bonded (e.g., siloxane bonded) through catalytic action, light irradiation, heating, or the like, for example.

[Example]

[Example 1]

(1) preparation of polyester resin A

An agitator, a thermometer, a nitrogen inlet tube, and a cooling tube with a trap were attached to a four-necked separable flask. In this flask, 47 g of terephthalic acid (molecular weight: 166) and 45 g of isophthalic acid (molecular weight: 166) as carboxylic acid components, 115 g of polytetramethylene glycol (molecular weight: 566), 4 g of ethylene glycol (molecular weight: 62), 16 g of neopentylglycol (molecular weight: 104), and 23 g of cyclohexane dimethanol (molecular weight: 144) as alcohol components, and 0.1 g of tetrabutyltitanate as a catalyst were placed. While the inside of the flask was filled with a nitrogen gas, with stirring, the temperature was elevated to 240°C, and maintained at 240°C for 4 hours.

Thereafter, the nitrogen inlet tube and the cooling tube with a trap were removed, and a vacuum pump was installed instead, and, during stirring in a reduced pressure ambient (0.002 MPa), the temperature was elevated to 240°C and maintained at 240°C. The reaction was continued for about 6 hours, whereby polyester resin A was obtained. Polyester resin A was obtained by polymerizing the aforementioned monomer without using a solvent. In a GPC measurement, polyester resin A had a weight average molecular weight (Mw) of 59,200. While dissolving in ethyl acetate, the prepared polyester resin A was taken out of the flask, thus preparing a polyester resin A solution having a solid concentration of 50 mass%.

(2) preparation of adhesive composition solution

To 100 mass parts in solid content of the polyester resin A solution prepared as above, 0.07 mass parts of zirconium tetraacetylacetonate (product name "Orgatix ZC-162", manufactured by Matsumoto Fine Chemical Co., Ltd.; "Orgatix" is a registered trademark; hereinafter may be referred to as "ZC-162") as a cross-linking catalyst, 12 mass parts of isocyanurate of hexamethylene diisocyanate (product name "Coronate HX", manufactured by Tosoh Corporation; "Coronate" is a registered trademark; hereinafter may be referred to as "Coronate HX") as a cross-linking agent, and 20 mass parts of acetylacetone as a catalytic reaction inhibitor were blended; to this, ethyl acetate was further added to result in a solid concentration of 20 mass%, thus preparing an adhesive composition solution (also referred to as "polyester adhesive composition solution A").

(3) production of adhesive sheet

On one side of a substrate (first separator) having been silicone release-treated, the adhesive composition solution was applied to form an adhesive composition solution layer. As the first separator, a polyethylene terephthalate (PET) film (product name: "MRF38", manufactured by Mitsubishi Chemical Corporation) having a thickness of 38 $\mu$m was used. The application of the adhesive composition solution layer was performed so that the adhesive layer had a thickness of 10 $\mu$m after the below-described treatment step at 40°C for 3 days. By drying the adhesive composition solution layer at 150°C for 1 minute, the solvent in the adhesive composition solution layer was removed, whereby an adhesive composition layer was obtained. Next, the adhesive composition layer was attached onto a release-treated surface of another substrate (second separator) having been silicone release-treated, and this was left at 40°C for 3 days. As the second separator, a biaxially oriented polyethylene terephthalate film (manufactured by Mitsubishi Chemical Corporation, product name: DIAFOIL T302; hereinafter may be referred to as "T302") having a thickness of 75 $\mu$m was used. By treating the adhesive composition layer at 40°C for 3 days, the polyester resin A in the adhesive composition layer was cross-linked by the cross-linking agent, thus forming an adhesive layer. In this manner, an adhesive sheet (multilayered body) having a layered structure of first separator (PET film)/adhesive layer/second separator (PET film) was produced. Although the cross-linking reaction of polyester resin A may partially occur also in the step of treating the adhesive composition solution layer at 150°C for 1 minute, a large part of the cross-linking reaction occurs in the subsequent step of heat treatment at 40°C for 3 days.

(4) production of concavo-convex textured film A

Concavo-convex textured film A was produced according to a method described in Japanese National Phase PCT Laid-Open Publication No. 2013-524288. Specifically, the surface of a polymethyl methacrylate (PMMA) film was coated with a lacquer (manufactured by Sanyo Chemical Co., FINECURE RM-64); an optical pattern was embossed on the film surface including the lacquer; and thereafter the lacquer was cured to produce the concavo-convex textured film of interest. Concavo-convex textured film A had a total thickness of 130 $\mu$m, and a haze value of 0.8%.

As viewed from the concavo-convex surface side, FIG. **9A** shows a plan view of a portion of the resultant concavo-convex textured film A, as the concavo-convex textured film **70**. FIG. **9B** shows a cross-sectional view of the concavo-convex textured film **70** at **9B-9B'** in FIG. **9A.** A plurality of dents **74** having a length **L** of 86 $\mu$m, a width **W** of 9.2 $\mu$m, and a depth **H** of 10 $\mu$m and having a triangular cross-section are disposed at intervals of **E** (155 $\mu$m) along the X axis direction. Furthermore, patterns of such dents **74** are disposed at intervals of **D** (100 $\mu$m) along the Y axis direction. The dents **74** had a pitch **Px** along the X axis direction of 241 $\mu$m (Px=L+E), and a pitch **Py** along the Y axis direction of 109.2 $\mu$m (Py=W+D) . The dents **74** had a density of 3612/cm$^2$ on the concavo-convex textured film surface. In FIG. **9B,** the inclination angle $\theta$**a** was 49°, the inclination angle $\theta$**b** was 85°, and the dents **74** had an occupied area ratio of 4.05% in a plan view of the film as seen from the concavo-convex surface side.

(5) production of optical stack

By using the adhesive sheet from (3) above and concavo-convex textured film A from (4) above, an optical stack was produced as follows.

In the adhesive sheet from (3) above, i.e., a multilayered body having a layered structure of first separator/adhesive layer/second separator, one of the principal faces of the adhesive layer has been attached onto the release-treated surface of the first separator, and the other principal face of the adhesive layer has been attached onto the release-treated surface of the second separator. First, from the adhesive sheet from (3) above, the first separator was peeled off, and the exposed surface (one of the principal faces) of the adhesive layer was attached onto an acrylic resin film (thickness: 30 $\mu$m) in between nip rollers including a drive roll and a driven roll, whereby a multilayered body having a layered structure of acrylic resin film/adhesive layer/second separator was obtained. Then, the second separator was peeled off from the resultant multilayered body, and the exposed surface (the other principal face) of the adhesive layer was attached onto the surface of concavo-convex textured film A from (4) above featuring a concavo-convex structure, in between nip rollers including a drive roll and a driven roll, whereby an optical stack having a layered structure of acrylic resin film/adhesive layer/concavo-convex textured film A was obtained. In attaching together the multilayered body having an adhesive layer and an acrylic resin film and concavo-convex textured film A, the nip pressure between the nip rollers including a drive roll and a driven roll was chosen as shown in Table 1A to Table 1C. As a result, an optical stack having an elongated shape with a width of 300 mm and having a layered structure of acrylic resin film/adhesive layer/concavo-convex textured film A was obtained.

In the optical stack, the principal face of the adhesive layer that has been attached onto the release-treated surface of the second separator is now attached to the surface of concavo-convex textured film A featuring a concavo-convex structure. The release-treated surface of T302 used as the second separator had an arithmetic mean roughness Ra of 0.02 $\mu$m and a maximum height Rz of 0.15 $\mu$m.

[Example 2]

An optical stack was produced in a similar manner to Example 1 except that the thickness of the adhesive layer was changed as shown in Table 1A to Table 1C.

[Example 3]

An optical stack was produced in a similar manner to Example 2 except that the nip pressure between the nip rollers and the type of second separator were changed as shown in Table 1A to Table 1C. In Example 3, as the second separator (PET film), i.e., a separator to be attached onto the principal face of the adhesive layer that would be attached onto concavo-convex textured film A, a commercially-available ultra-high phase difference polyethylene terephthalate film (manufactured by Mitsubishi Chemical Corporation, product name: DIAFOIL MRF38CK) (hereinafter may be referred to as "38CK") having a thickness of 38 $\mu$m was used. The release-treated surface (i.e., the surface to come in contact with the adhesive layer) of 38CK used as the second separator had an arithmetic mean roughness Ra of 0.01 $\mu$m, and a maximum height Rz of 0.10 $\mu$m.

[Example 4]

An optical stack was produced in a similar manner to Example 3 except that concavo-convex textured film B was used instead of concavo-convex textured film A.

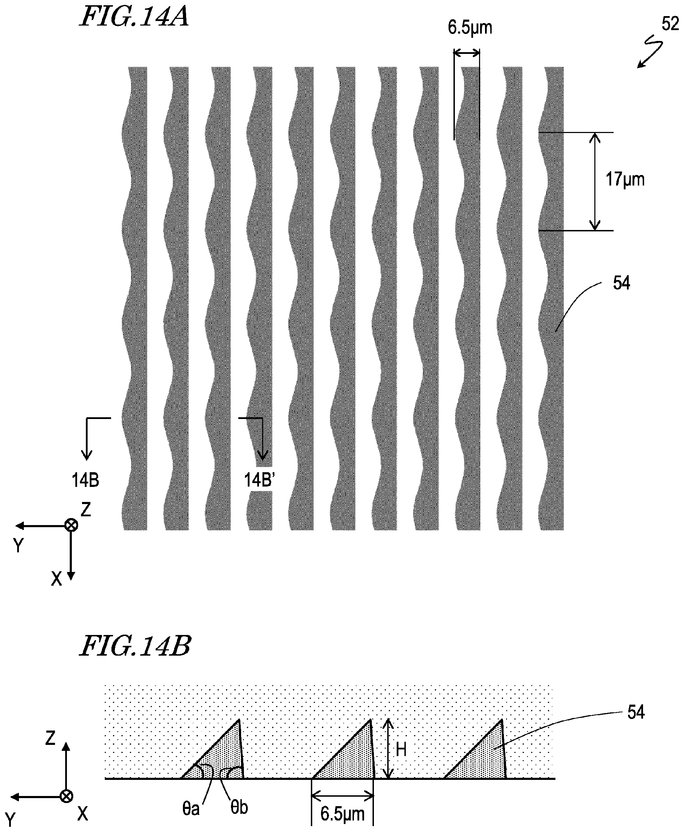

In concavo-convex textured film B, an occupied area ratio of the dents in a plan view in which the film was viewed from the concavo-convex surface side was 66%. Concavo-convex textured film B features a higher occupied area ratio of the dents than does concavo-convex textured film A. As viewed from the concavo-convex surface side, FIG. **14A** shows a plan view of a portion of concavo-convex textured film B being used, as a concavo-convex textured film **52**. FIG. **14B** shows a cross-sectional view along **14B-14B'** in FIG. **14A**. When the concavo-convex textured film **52** was viewed from the concavo-convex surface side, the area of the dents **54** accounted for 66% in the entire area of the oncavo-convex textured film **52**. The dents **54** of the concavo-convex textured film **52** were continuous along the X direction (i.e., being grooves extending along the X direction), and spaced apart at predetermined intervals in the Y direction. Each dent **54** had a triangular cross-sectional shape with a depth **H** of 6.78 $\mu$m, a maximum width value of 6.5 $\mu$m, an inclination angle $\theta$**a** of 50°, and an inclination angle $\theta$**b** of 85°. The width of the dents **54** varies with a period of 17 $\mu$m. When the concavo-convex textured film **52** is used for an illumination device, for example, it is to be disposed so that the dents **54** protrude toward the light source side in a plan view.

[Example 5]

An optical stack was produced in a similar manner to Example 4 except that the thickness of the adhesive layer was changed as shown in Table 1A to Table 1C.

[Example 6]

An optical stack was produced in a similar manner to Example 2 except that the following adhesive layer was used. The adhesive layer was produced as follows.

(1) preparation of acrylic polymer solution

First, an acrylic polymer was prepared. By using a four-necked flask equipped with stirring blades, a thermometer, a nitrogen gas inlet tube, and a condenser, 74.6 mass parts of n-butyl acrylate (BA), 18.6 mass parts of 4-acryloyl morpholine (ACMO), 6.5 mass parts of acrylic acid (AA), 0.3 mass parts of 4-hydroxybutyl acrylate (4HBA), and 0.1 mass parts of 2,2'-azobisisobutyronitrile as a polymerization initiator were placed in the flask together with ethyl acetate, so that the total of monomers was 50 mass%. After nitrogen replacement for 1 hour by introducing nitrogen gas with gentle stirring, the liquid temperature in the flask was kept at around 58°C and the polymerization reaction was carried out for 8 hours, whereby an acrylic polymer was obtained. After 2 hours had elapsed from the start of the polymerization reaction, ethyl acetate was added dropwise over 3 hours to bring the solid content to 35 mass%. In other words, the acrylic polymer was obtained as an acrylic polymer solution with a solid content of 35 mass%.

(2) preparation of adhesive composition solution

Then, in the resultant acrylic polymer solution, with respect to 100 mass parts of the polymer, 10 mass parts in solid content of a UV-curable urethane acrylate resin A (weight average molecular weight Mw: 5,500), 1.0 mass part of 4-(2-hydroxyethoxy)phenyl(2-hydroxy-2-propyl)ketone (product name: "Omnirad2959", manufactured by IGM Japan, Inc.) as a photopolymerization initiator, and 0.6 mass parts of 1,3-bis(N,N-diglycidylaminomethyl)cyclohexane (product name: "TETRAD-C", manufactured by Mitsubishi Gas Chemical Company, Inc.) as a cross-linking agent were blended, thereby preparing an adhesive composition solution (hereinafter may be referred to as "acrylic adhesive composition solution A").

(3) production of adhesive sheet

On one side of a polyethylene terephthalate (PET) film (product name: "MRF38", manufactured by Mitsubishi Chemical Corporation) having a thickness of 38 $\mu$m and having been silicone release-treated, acrylic adhesive composition solution A was applied to form an adhesive composition solution layer. The application was performed so that the adhesive composition solution layer had a thickness after drying (i.e., thickness of the adhesive composition layer) of 5 $\mu$m. By drying the adhesive composition solution layer at 150°C for 3 minutes, the solvent in the adhesive composition solution layer was removed, and the acrylic polymer was cross-linked by the cross-linking agent, whereby an adhesive layer having a cross-linked structure composed of the acrylic polymer and the cross-linking agent was obtained. Herein, the adhesive layer was obtained without curing the UV-curable resin in the adhesive composition solution. The resultant adhesive layer does not have a cross-linked structure which would be formed by curing the UV-curable resin. Next, the adhesive composition layer was attached onto a release-treated surface of a polyethylene terephthalate (PET) film (product name: "MRE38", manufactured by Mitsubishi Chemical Corporation) having a thickness of 38 $\mu$m and having been silicone release-treated, thereby producing an adhesive sheet having a layered structure of PET film/adhesive layer/PET film.

By using adhesive sheet from (3) above, an optical stack was produced in a similar manner to Example 2.

[Example 7]

An optical stack was produced in a similar manner to Example 6 except that the thickness of the adhesive layer was changed as shown in Table 1A to Table 1C.

[Example 8]

An optical stack was produced in a similar manner to Example 7 except that the nip pressure between the nip rollers was changed as shown in Table 1A to Table 1C.

[Example 9]

An optical stack was produced in a similar manner to Example 6 except that the nip pressure between the nip rollers was changed as shown in Table 1A to Table 1C.

[Example 10]

An optical stack was produced in a similar manner to Example 9 except that the thickness of the adhesive layer was changed as shown in Table 1A to Table 1C.

[Example 11]

An optical stack was produced in a similar manner to Example 9 except that concavo-convex textured film B was used instead of concavo-convex textured film A.

[Example 12]

An optical stack was produced in a similar manner to Example 11 except that the thickness of the adhesive layer was changed as shown in Table 1A to Table 1C.

[Example 13]

(1) preparation of acrylic polymer solution

First, an acrylic polymer was prepared. By using a four-necked flask equipped with stirring blades, a thermometer, a nitrogen gas inlet tube, and a condenser, 90.7 mass parts of n-butyl acrylate (BA), 6.3 mass parts of 4-acryloyl morpholine (ACMO), 2.7 mass parts of acrylic acid (AA), 0.3 mass parts of 4-hydroxybutyl acrylate (4HBA), and 0.1 mass parts of 2,2'-azobisisobutyronitrile as a polymerization initiator were placed in the flask together with ethyl acetate, so that the total of monomers was 50 mass%. After nitrogen replacement for 1 hour by introducing nitrogen gas with gentle stirring, the liquid temperature in the flask was kept at around 58°C and the polymerization reaction was carried out for 8 hours, whereby an acrylic polymer was obtained. After 2 hours had elapsed from the start of the polymerization reaction, ethyl acetate was added dropwise over 3 hours to bring the solid content to 35 mass%. In other words, the acrylic polymer was obtained as an acrylic polymer solution with a solid content of 35 mass%.

(2) preparation of adhesive composition solution

In the resultant acrylic polymer solution, 0.1 mass parts of 1,3-bis(N,N-diglycidylaminomethyl)cyclohexane (product name "TETRAD-C", manufactured by Mitsubishi Gas Chemical Company, Inc.) as a cross-linking agent was blended with respect to 100 mass parts of the solid content (polymer), thereby preparing an adhesive composition solution (which may also be referred to as "acrylic adhesive composition solution B").

(3) production of adhesive sheet

On one side of a polyethylene terephthalate (PET) film (product name: "MRF38", manufactured by Mitsubishi Chemical Corporation) having a thickness of 38 $\mu$m and having been silicone release-treated, acrylic adhesive composition solution B was applied to form an adhesive composition solution layer. The application was performed so that the adhesive composition solution layer had a thickness after drying (i.e., thickness of the adhesive composition layer) of 5 um. By drying the adhesive composition solution layer at 150°C for 3 minutes, the solvent in the adhesive composition solution layer was removed, and the acrylic polymer was cross-linked by the cross-linking agent, whereby an adhesive layer having a cross-linked structure composed of the acrylic polymer and the cross-linking agent was obtained. Next, the adhesive composition layer was attached onto a release-treated surface of a polyethylene terephthalate (PET) film (product name: "MRE38", manufactured by Mitsubishi Chemical Corporation) having a thickness of 38 $\mu$m and having been silicone release-treated, thereby producing an adhesive sheet having a layered structure of PET film/adhesive composition layer/PET film.

(4) production of concavo-convex textured film A

This was performed similarly to Example 1.

(5) production of optical stack

An optical stack was produced in a similar manner to Example 1 except that the adhesive sheet from (3) above and concavo-convex textured film A from (4) above were used, and that the nip pressure between the nip rollers was changed as shown in Table 1A to Table 1C.

[Example 14]

(1) preparation of acrylic polymer solution

This was performed similarly to Example 13.

(2) preparation of adhesive composition solution

To 100 mass parts in solid content of the resultant acrylic polymer solution, 0.25 mass parts of dibenzoyl peroxide (1-minute half-life: 130°C) as a cross-linking agent and 0.15 mass parts of a polyisocyanate-based cross-linking agent composed of a trimethylolpropane adduct of tolylene diisocyanate (manufactured by Nippon Polyurethane Industry Co., Ltd.; Coronate L), and 0.075 mass parts of a silane coupling agent (3-glycidoxypropyltrimethoxysilane (manufactured by Shin-Etsu Chemical Co., Ltd.; product name "KBM-403") were blended, thereby preparing an adhesive composition solution (which hereinafter may be referred to "acrylic adhesive composition solution C").

(3) production of adhesive sheet

This was performed similarly to Example 13 except that acrylic adhesive composition solution C from (2) above was used, and that the thickness of the adhesive layer was changed as shown in Table 1A to Table 1C.

(4) production of concavo-convex textured film A

This was performed similarly to Example 13.

(5) production of optical stack

This was performed similarly to Example 13.

[Comparative Example 1]

An optical stack was produced in a similar manner to Example 14 except that the thickness of the adhesive layer was changed as shown in Table 1A to Table 1C.

[Example 15]

An optical stack was produced in a similar manner to Example 14 except that the nip pressure between the nip rollers was changed as shown in Table 1A to Table 1C.

[Example 16]

An optical stack was produced in a similar manner to Example 15 except that the thickness of the adhesive layer was changed as shown in Table 1A to Table 1C.

[Example 17]

An optical stack was produced in a similar manner to Example 13 except that the thickness of the adhesive layer and the nip pressure between the nip rollers were changed as shown in Table 1A to Table 1C and that concavo-convex textured film B was used instead of concavo-convex textured film A.

[Comparative Example 2]

(1) preparation of acrylic polymer solution

This was performed similarly to Example 13.

(2) preparation of adhesive composition solution

In the resultant acrylic polymer solution, 0.15 mass parts of a trimer adduct of trimethylolpropane/tolylene diisocyanate (manufactured by Tosoh Corporation; product name Coronate L) and 0.075 mass parts of dibenzoyl peroxide (manufactured by Nippon Oil & Fats Co., Ltd.: NYPER BMT40(SV)) were added as cross-linking agents with respect to 100 mass parts of the polymer, thereby preparing an adhesive composition solution (which may be referred to as "acrylic adhesive composition solution D").

An optical stack was produced in a similar manner to Example 13 except that the nip pressure between the nip rollers was changed as shown in Table 1A to Table 1C.

[measurement method]

Measurement conditions for the respective properties were as follows.

<area ratio of air voids>

The optical stacks produced according to Examples and Comparative Examples were cut into pieces of 10 cm × 10 cm, and five places in each were observed with a microscope. The method of observation involved acquiring an image in a viewing angle range of 3.5 mm × 3.5 mm with an optical microscope, binarizing it into air void portions and non-air void portions, and calculating an area ratio of the air voids (area ratio of air voids = area of air void portions/entire area of the field of view). The minimize size of air voids detectable by the optical microscope was 1.7 $\mu$m (i.e., the size of 1 pixel (pixel resolution) was a 1.7 $\mu$m × 1.7 $\mu$m square).

<height of adhesive layer existing in dents of concavo-convex textured film>

A cross section of the produced optical stack was cut out, and with respect to an arbitrary dent, the height of the adhesive layer existing in the dent was measured with a SEM. Specifically, first, a piece of 5 mm × 5 mm was cut out from the optical stack produced according to each Example or Comparative Example. Thereafter, the test piece having been cut out was kept in a cold state; a cross section was prepared through FIB processing (manufactured by FEI; Helios G4 UX DualBeam System); and a cross-sectional SEM image was observed.

<roughness Ra, Rz of surface of adhesive layer>

From the adhesive sheet obtained according to each Example or Comparative Examples, one of the separators (PET films) was peeled off, and the roughness of the exposed surface of the adhesive layer was measured with a non-contact surface profiler (manufactured by ZYGO; NewView7300). By following a measurement method described in JIS B0601-2001, an arithmetic mean roughness Ra and a maximum height Rz of the surface of the adhesive layer were measured. In Table 1A to Table 1C, "- " means absence of measurement.

\<nip pressure, pressure applied to flat portions\>

Regarding the measurement of nip pressure between the rolls, pressure-sensitive paper (manufactured by FUJIFILM Corporation; Prescale 3LW) was attached onto the entire width of the rolls (width 250 mm, diameter 200 mm) to be nipped, and pressure (MPa) was measured. In Table 1A to Table 1C, a mean value across the entire width to be nipped is indicated as a "nip pressure". Unevenness in pressure in the TD direction schematically illustrated in FIG. **6** substantially did not occur with the rolls used herein. Unevenness in pressure in the TD direction schematically illustrated in FIG. **6** is more likely to occur when the ratio of the roll width (i.e., length along the TD direction) to the roll diameter is large.

Regarding the pressure applied to the flat portions (i.e., pressure applied to portions other than the dents), the value of nip pressure between the rolls measured as above was subjected to a conversion that subtracted the area of the dents therefrom as in the following equation, assuming that no pressure would act on the dents of the surface of the concavo-convex textured film. As the occupied area ratio of the dents, a design value of the concavo-convex textured film was used.

$$\text{(pressure applied to flat portions)} = \text{(nip pressure)}/(1-\text{occupied area ratio of dents})$$

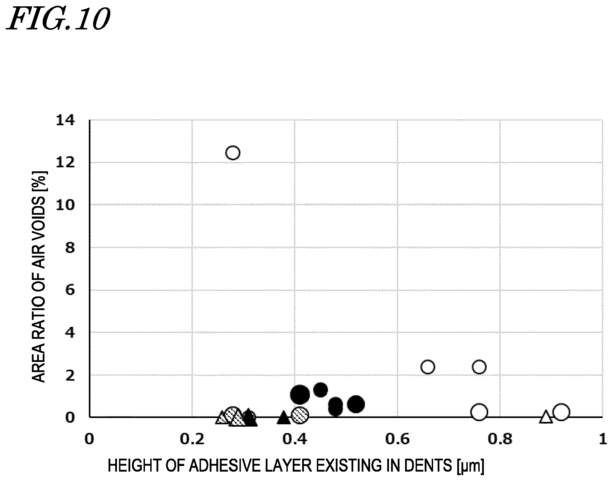

The evaluation results are shown in Table 1A, Table 1B, Table 1C, and FIG. **10**. FIG. **10** is a graph showing evaluation results of area ratio (%) of the air voids and height ($\mu$m) of the adhesive layer existing in the dents, in optical stacks according to Examples and Comparative Examples. In FIG. **10**, results for Examples 1 to 5, in which polyester adhesive composition solution A was used, are indicated with obliquely-hatched circles or triangles; results for Examples 6 to 12, in which acrylic adhesive composition solution A was used, are indicated with dark circles or triangles; and results for Example 13 to 17 and Comparative Example 1, in which acrylic adhesive composition solution B or C was used, are indicated with blank circles or triangles. Results for those using concavo-convex textured film A are indicated with circles, while results for those using concavo-convex textured film B are indicated with triangles. Note that no result for Comparative Example 2 is shown in FIG. **10**.

[Table 1A]

| | Ex. 1 | Ex. 2 | Ex. 3 | Ex. 6 | Ex. 7 | Ex. 8 | Ex. 9 | Ex. 10 |
|---|---|---|---|---|---|---|---|---|
| concavo-convex textured film | concavo-convex textured film A | | | | | | | |
| occupied area ratio of dents | 4.05% | | | | | | | |
| adhesive composition solution | polyester adhesive composition solution A | | | acrylic adhesive composition solution A | | | | |
| nip pressure [MPa] | 0.13 | 0.13 | 0.2 | 0.13 | 0.13 | 0.3 | 0.2 | 0.2 |
| pressure applied to flat portions [MPa] | 0.135 | 0.135 | 0.208 | 0.135 | 0.135 | 0.313 | 0.208 | 0.208 |
| thickness of adhesive layer [$\mu$m] | 10 | 5 | 5 | 5 | 7 | 7 | 5 | 7 |
| area ratio of air voids [%] | 0.01 | 0.1 | 0.1 | 0.64 | 1.3 | 0.4 | 1.09 | 0.61 |
| maximum value of height of adhesive layer existing in dents [$\mu$m] | 0.31 | 0.41 | 0.28 | 0.52 | 0.45 | 0.48 | 0.41 | 0.48 |
| arithmetic mean roughness Ra of surface of adhesive layer [$\mu$m] | - | - | - | - | - | - | - | - |
| maximum height Rz of surface of adhesive layer [$\mu$m] | - | - | - | - | - | - | - | - |
| type of separator | T302 | T302 | 38CK | T302 | T302 | T302 | 38CK | 38CK |

[Table 1B]

| | Ex. 13 | Ex. 14 | Comp. Ex. 1 | Ex. 15 | Ex. 16 | Ex. 17 |
|---|---|---|---|---|---|---|
| concavo-convex textured film | concavo-convex textured film A | | | | | concavo-convex textured film B |
| occupied area ratio of dents | 4.05% | | | | | 66% |
| adhesive composition solution | acrylic adhesive composition solution B | acrylic adhesive composition solution C | | | | acrylic adhesive composition solution B |
| nip pressure [MPa] | 0.14 | 0.14 | 0.14 | 0.2 | 0.2 | 0.13 |
| pressure applied to flat portions [MPa] | 0.146 | 0.146 | 0.146 | 0.208 | 0.208 | 0.382 |
| thickness of adhesive layer [$\mu$m] | 5 | 3 | 1 | 3 | 5 | 3 |
| area ratio of air voids [%] | 0.27 | 2.37 | 12.47 | 2.37 | 0.27 | 0.03 |
| maximum value of height of adhesive layer existing in dents [$\mu$m] | 0.92 | 0.66 | 0.28 | 0.76 | 0.76 | 0.89 |
| arithmetic mean roughness Ra of surface of adhesive layer [$\mu$m] | 24.7 | - | - | - | 24.7 | - |
| maximum height Rz of surface of adhesive layer [$\mu$m] | 190.7 | - | - | - | 190.7 | - |
| type of separator | 38CK | 38CK | 38CK | 38CK | 38CK | 38CK |

[Table 1C]

| | Ex. 4 | Ex. 5 | Ex. 11 | Ex. 12 | Comp. Ex. 2 |
|---|---|---|---|---|---|
| concavo-convex textured film | concavo-convex textured film B | | | | concavo-convex textured film A |
| occupied area ratio of dents | 66% | | | | 4.05% |
| adhesive composition solution | polyester adhesive composition solution A | | acrylic adhesive composition solution A | | acrylic adhesive composition solution D |
| nip pressure [MPa] | 0.2 | 0.2 | 0.2 | 0.2 | 0.05 |
| pressure applied to flat portions [MPa] | 0.588 | 0.588 | 0.588 | 0.588 | 0.051 |
| thickness of adhesive layer [$\mu$m] | 5 | 7 | 5 | 7 | 5 |
| area ratio of air voids [%] | 0.01 | 0.01 | 0.01 | 0.01 | <0.01 |
| maximum value of height of adhesive layer existing in dents [$\mu$m] | 0.29 | 0.26 | 0.31 | 0.38 | 2.7 |
| arithmetic mean roughness Ra of surface of adhesive layer [$\mu$m] | - | - | - | - | - |
| maximum height Rz of surface of adhesive layer [$\mu$m] | - | - | - | - | - |

(continued)

|  | Ex. 4 | Ex. 5 | Ex. 11 | Ex. 12 | Comp. Ex. 2 |
|---|---|---|---|---|---|
| type of separator | 38CK | 38CK | 38CK | 38CK | 38CK |

In the optical stacks according to Example 1 to Example 17, an area ratio of air voids existing at interfaces between the flat portions and the adhesive layer is 3% or less, and the height of the adhesive layer existing in the plurality of dents is 2 $\mu$m or less. On the other hand, in the optical stacks according to Comparative Examples 1 and 2, air voids existing at interfaces between the flat portions and the adhesive layer have an area ratio greater than 3%, and/or the height of the adhesive layer existing in the plurality of dents is more than 2 $\mu$m. The optical stack according to Example 14 and the optical stack according to Comparative Example 1 were produced so that the only difference between them was the thickness of the adhesive layer above the flat portions; while the area ratio of air voids existing at interfaces between the flat portions and the adhesive layer was kept at 3% or less in the optical stack according to Example 14, it was more than 3% in the optical stack according to Comparative Example 1. From these results, the thickness of the adhesive layer above the flat portions is preferably e.g. 2 $\mu$m or more. However, the area ratio of air voids existing at interfaces between the flat portions and the adhesive layer may vary depending not only on the thickness of the adhesive layer above the flat portions, but also on: the pressure that is applied to the adhesive layer and the optical sheet when the adhesive layer and the optical sheet are attached together; the surface roughness of the surface of a separator that is used when producing the adhesive layer (specifically, surface roughness of the surface of the separator to be attached onto the surface of the adhesive layer that would be attached onto the surface of the optical sheet featuring a concavo-convex structure); the gel fraction in the adhesive layer; and so on. The degree of penetration of the adhesive layer into the plurality of dents of the concavo-convex structure (i.e., the height of the adhesive layer existing in the dents) may also vary depending on the aforementioned producing conditions for the adhesive layer and the aforementioned physical properties of the adhesive layer. For example, even with the same adhesive composition solution, the cross-linking density of the adhesive layer may differ if the thickness of the adhesive layer (i.e., the thickness of the adhesive layer above the flat portions) varies, thus resulting in a different degree of penetration of the adhesive layer into the plurality of dents. Therefore, without being limited to the aforementioned Examples, optical stacks according to embodiments of the present invention may be obtained by appropriately adjusting the producing conditions for the adhesive layer and the physical properties of the adhesive layer.

In Examples 6 to 12, in which acrylic adhesive composition solution A was used, the adhesive layer was produced without curing the UV-curable resin contained in acrylic adhesive composition solution A as mentioned above. Without being limited to this, the adhesive layer may contain a cured material of the UV-curable resin. In other words, an acrylic adhesive composition solution containing the UV-curable resin may be used, and an adhesive layer resulting from curing the UV-curable resin may be used. The surface roughness of the resultant adhesive layer does not considerably vary depending on whether the UV-curable resin is cured or not; neither does the area ratio of the air voids in the optical stack.

<changes in the degree of penetration of adhesive layer into dents during lamination and after lamination>

By using optical stacks according to Example A and Example B below, changes in the degree of penetration of the adhesive layer into the dents during lamination and after lamination were observed.

The optical stack according to Example A was produced in a similar manner to the optical stack according to Example 1 except that the thickness of the adhesive layer was 300 $\mu$m, whereby an optical stack having a layered structure of acrylic resin film/adhesive layer/concavo-convex textured film B was produced. The optical stack according to Example B was produced in a similar manner to Comparative Example 1 except that the thickness of the adhesive layer was 160 $\mu$m, whereby an optical stack having a layered structure of acrylic resin film/adhesive layer/concavo-convex textured film B was produced. Herein, the adhesive layer was formed thick, such that penetration (filling) of the adhesive layer into the dents would be easily observed.

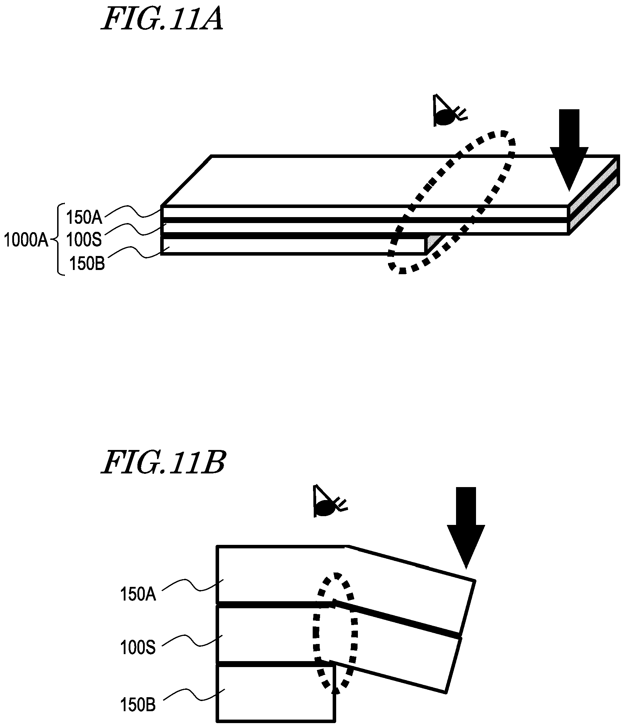

As shown in FIG. 11A, a transparent plate 150A was disposed on one of the principal faces of the optical stack 100S according to Example A and a transparent plate 150B on the other principal face, this being defined as a sample 1000A. FIG. 11B is a diagram schematically showing a cross section of the sample 1000A. The transparent plate 150B was shorter than the optical stack 100S, and the optical stack 100S according to Example A was placed so as to be in contact with a corner of the transparent plate 150B. By pressing the optical stack 100S according to Example A against the corner of the transparent plate 150B, force was applied with a hand to the optical stack 100S according to Example A via the transparent plate 150A (arrow in the figure). The optical stack 100S (the portion in a broken-lined ellipse in the figure) was observed during the force application and after removal of the force.

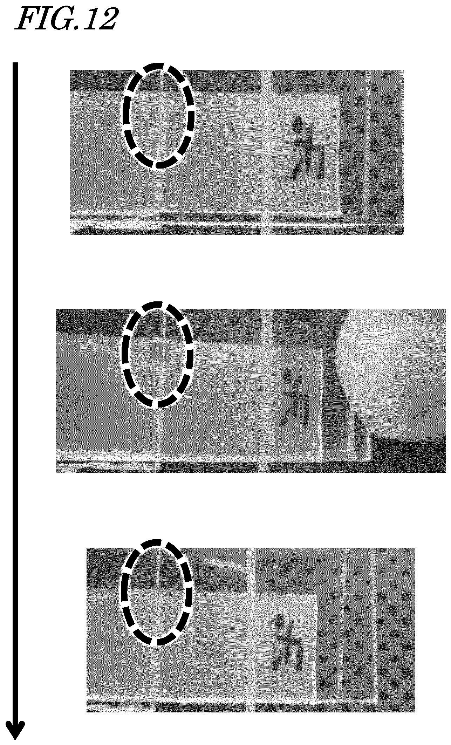

FIG. 12 shows optical images of: the sample 1000A before application of a force (top); the sample 1000A

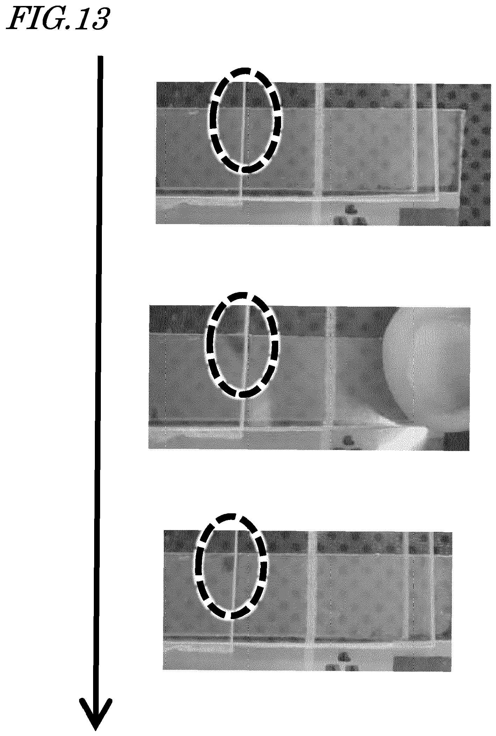

during the force application (middle); and the sample **1000A** after removal of the force (bottom). FIG. **13** shows results of making similar evaluations in the case where the optical stack according to Example B was used instead of the optical stack according to Example A. FIG. **13** shows optical images of: a sample having the optical stack according to Example B before application of a force (top); the sample having the optical stack according to Example B during the force application (middle); and the sample having the optical stack according to Example B after removal of the force (bottom).

As seen from FIG. **12** and FIG. **13,** in both of the optical stack according to Example A and the optical stack according to Example B, there is a portion with improved transparency (the portion in a broken-lined ellipse in the figure) during the force application (middle in FIG. **12** and FIG. **13**) relative to that before the force application (top in FIG. **12** and FIG. **13**). This is because: before the force application, a plurality of internal spaces are created by the concavo-convex surface of the concavo-convex textured film and the adhesive layer; once a force is applied, the dents in the concavo-convex textured film are filled with the adhesive layer, so that the plurality of internal spaces constituting a light distribution control structure disappear. Once the applied force was removed (bottom in FIG. **12** and FIG. **13**), transparency was restored in the optical stack according to Example A; in the optical stack according to Example B, however, transparency remained improved instead of being restored. Upon observing the optical stack with an optical microscope, it was confirmed that a pattern of internal spaces was not seen in the portion with improved transparency, i.e., no internal spaces had been formed. In other words, presumably: in the optical stack according to Example A, once the force was removed, the adhesive layer that had penetrated into the dents due to the force application restored a state of not penetrating into the dents (or a state of suppressed penetration into the dents); in the optical stack according to Example B, on the other hand, the adhesive layer that had penetrated into the dents due to the force application remained penetrating into the dents even after the force was removed. However, this evaluation was made by forming the adhesive layer thick, such that penetration (filling) of the adhesive layer into the dents would be easily observed; therefore, this evaluation result should not limit the adhesive layer to be included in optical stacks according to embodiments of the present invention. As described above, in the optical stacks according to Examples 14 to 16, in which an adhesive layer of the same composition as that of the optical stack according to Example B was used, it proved that an area ratio of air voids existing at interfaces between the flat portions and the adhesive layer is 3% or less, and the height of the adhesive layer existing in the plurality of dents was 2 $\mu$m or less.

## INDUSTRIAL APPLICABILITY

Optical stacks according to the present invention can be broadly used in optical devices, such as display devices or illumination devices.

## REFERENCE SIGNS LIST

1

**0a** first optical sheet
**12s, 18s** principal face (surface)
**20a** adhesive layer
**60** light source
**80** lightguide layer
**100A, 102A, 102B** optical stack
**200A, 200B** illumination device

## Claims

1.  An optical stack comprising:

a first optical sheet having a first principal face with a concavo-convex structure and a second principal face at an opposite side from the first principal face; and
an adhesive layer that is disposed on the first principal face of the first optical sheet, wherein,
the concavo-convex structure includes a plurality of dents and flat portions between adjacent ones of the plurality of dents;
the adhesive layer is in contact with the flat portions;
a surface of the adhesive layer and the first principal face of the first optical sheet together define an internal space within each of the plurality of dents;
in a plan view from a normal direction of the first principal face of the first optical sheet, an area ratio of air voids existing at interfaces between the flat portions and the adhesive layer to an area of the first optical sheet is 3% or less; and

a height of the adhesive layer existing in the plurality of dents is 2 μm or less.

2. The optical stack of claim 1, wherein the adhesive layer is any one of adhesive layers A, B and C as follows:

an adhesive layer A, having a creep deformation rate of 10% or less when a stress of 10000 Pa is applied for 1 second at 50°C and a creep deformation rate of 16% or less when a stress of 10000 Pa is applied for 30 minutes at 50°C in a creep test using a rotational rheometer,
the adhesive layer A having a 180° peel adhesive strength of 10 mN/20 mm or more with respect to a PMMA film;
an adhesive layer B, being formed by curing a curable resin in an adhesive composition that includes a polymer and the curable resin,
the adhesive layer B having a 23°C initial tensile modulus of elasticity of not less than 0.35 MPa and not more than 8.00 MPa before curing the curable resin in the adhesive composition and
having a 23°C initial tensile modulus of elasticity of 1.00 MPa or more after curing the curable resin in the adhesive composition; and
an adhesive layer C, being formed by cross-linking an adhesive composition containing: a polyester resin that is a copolymer of a polycarboxylic acid and a polyalcohol; a cross-linking agent; and at least one cross-linking catalyst selected from the group consisting of an organic zirconium compound, organic iron compound, and an organic aluminum compound,
the adhesive layer C having a gel fraction of 40% or more after being maintained at a temperature of 85°C and a relative humidity of 85% for 300 hours and
having a 180° peel adhesive strength of 100 mN/20 mm or more with respect to a PMMA film.

3. The optical stack of claim 1 or 2, wherein a thickness of the adhesive layer above the flat portions is not less than 2.0 μm and not more than 15.0 μm.

4. The optical stack of any one of claims 1 to 3, wherein, in a plan view in which the first optical sheet is viewed from a normal direction of the first principal face, a ratio of an area of the plurality of dents to an area of the first optical sheet is not less than 0.3% and not more than 80%.

5. The optical stack of any one of claims 1 to 4, wherein the plurality of dents have a cross-section which is a triangle, a rectangle, or a shape that at least partially contains a curve.

6. The optical stack of any one of claims 1 to 5, having a haze value of 5.0% or less.

7. The optical stack of any one of claims 1 to 6, wherein, each of the plurality of dents includes a first slope to direct a portion of light propagating in the adhesive layer toward the second principal face of the first optical sheet via total internal reflection, and a second slope at an opposite side from the first slope.

8. The optical stack of claim 7, wherein an inclination angle θa of the first slope is smaller than an inclination angle θb of the second slope.

9. An optical device comprising the optical stack of any one of claims 1 to 8.

10. A production method for the optical stack of any one of claims 1 to 8, the production method comprising:

step a of applying an adhesive composition solution containing a (meth)acrylic polymer and/or a polyester-based polymer, a cross-linking agent, and a solvent onto a release-treated principal face of a substrate having the release-treated principal face to form an adhesive composition solution layer;
step b of removing the solvent in the adhesive composition solution layer to form an adhesive composition layer;
step c of providing, on a principal face of the adhesive composition layer at an opposite side from the substrate, a further substrate having a release-treated principal face, in such a manner that the release-treated principal face is in contact with the adhesive composition layer;
step d of allowing the (meth)acrylic polymer and/or polyester-based polymer in the adhesive composition layer to be cross-linked by the cross-linking agent to form the adhesive layer; and
step e of attaching together the first principal face of the first optical sheet and a principal face at a side defined by one of the substrate or the further substrate of the adhesive layer, wherein

the release-treated principal face of the one of the substrate or the further substrate has an arithmetic mean roughness Ra of less than 0.05 $\mu$m.

11. The production method of claim 10, wherein the release-treated principal face of the one of the substrate or the further substrate has a maximum height Rz of less than 0.5 $\mu$m.

12. The production method of claim 10 or 11, wherein step e is performed by a roll-to-roll method.

*FIG.1A*

*FIG.1B*

*FIG.2*

*FIG.3*

*FIG.4A*

*FIG.4B*

FIG.5

FIG.6

*FIG.7A*

*FIG.7B*

# FIG.8

*FIG.9A*

70

74

Py

Py/2 — Py/2

L

E

D

Px/2

Px

Px/2

9B

9B'

Z

Y

X

*FIG.9B*

74

70

72s

θa  θb

W

H

Y

X

Z

*FIG.10*

*FIG.11A*

1000A { 150A
100S
150B

*FIG.11B*

150A

100S

150B

FIG.12

FIG.13

*FIG.14A*

*FIG.14B*

*FIG.15A*

82

Py

84

86s 87s

60

Px

82s

X
Y
Z

*FIG.15B*

θa  θb

60

H

84

86s

W

87s

*FIG.15C*

L

84

W

## INTERNATIONAL SEARCH REPORT

| | International application No. |
|---|---|
| | **PCT/JP2022/004556** |

**A. CLASSIFICATION OF SUBJECT MATTER**

*C09J 11/06*(2006.01)i; *G02C 1/06*(2006.01)i; *C09J 167/02*(2006.01)i; *C09J 201/00*(2006.01)i; *C09J 7/35*(2018.01)i; *B32B 3/26*(2006.01)i; *G02B 1/04*(2006.01)i; *G02B 5/02*(2006.01)i; *G02B 7/00*(2021.01)i
FI: G02B5/02 C; C09J167/02; C09J11/06; G02C1/06; G02B7/00 F; G02B1/04; C09J201/00; B32B3/26 A; C09J7/35

According to International Patent Classification (IPC) or to both national classification and IPC

**B. FIELDS SEARCHED**

Minimum documentation searched (classification system followed by classification symbols)

C09J11/06; G02C1/06; C09J167/02; C09J201/00; G02B7/00; G02B1/04; G02B5/02; C09J7/35; B32B3/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-178283 A (TOMOEGAWA PAPER CO LTD) 17 October 2019 (2019-10-17) claim 1, fig. 1b, 5b, 6, example 2, paragraphs [0032], [0057] | 1, 3-9 |
| Y | claim 1, fig. 1b, 5b, 6, example 2, paragraphs [0032], [0057] | 2 |
| A | entire text | 10-12 |
| X | JP 2009-122160 A (TOPPAN PRINTING CO LTD) 04 June 2009 (2009-06-04) claims 1, 8, 9, fig. 3, paragraph [0036], example 3 | 1, 3-7, 9 |
| Y | claims 1, 8, 9, fig. 3, paragraph [0036], example 3 | 2 |
| A | entire text | 8, 10-12 |
| Y | JP 2011-26361 A (LINTEC CORP) 10 February 2011 (2011-02-10) claims, examples, paragraphs [0002], [0004] | 2 |
| A | entire text | 1, 3-12 |
| Y | WO 2018/174198 A1 (MITSUBISHI CHEM CORP) 27 September 2018 (2018-09-27) claims, examples, paragraph [0008] | 2 |
| A | entire text | 1, 3-12 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 296 330 A1

## INTERNATIONAL SEARCH REPORT

International application No.

**PCT/JP2022/004556**

### C. DOCUMENTS CONSIDERED TO BE RELEVANT

| Category* | Citation of document, with indication, where appropriate, of the relevant passages | Relevant to claim No. |
|---|---|---|
| Y | JP 2017-61676 A (NIPPON SYNTHETIC CHEM IND CO LTD) 30 March 2017 (2017-03-30)<br>claims, examples, paragraph [0142] | 2 |
| A | entire text | 1, 3-12 |
| A | JP 2010-49820 A (KONICA MINOLTA OPTO INC) 04 March 2010 (2010-03-04)<br>entire text | 1-12 |
| P, A | WO 2021/167090 A1 (NITTO DENKO CORP) 26 August 2021 (2021-08-26)<br>entire text | 1-12 |
| P, A | WO 2021/167091 A1 (NITTO DENKO CORP) 26 August 2021 (2021-08-26)<br>entire text | 1-12 |

Form PCT/ISA/210 (second sheet) (January 2015)

47

INTERNATIONAL SEARCH REPORT
Information on patent family members

International application No.

**PCT/JP2022/004556**

| Patent document cited in search report | | | Publication date (day/month/year) | Patent family member(s) | | | Publication date (day/month/year) |
|---|---|---|---|---|---|---|---|
| JP | 2019-178283 | A | 17 October 2019 | (Family: none) | | | |
| JP | 2009-122160 | A | 04 June 2009 | (Family: none) | | | |
| JP | 2011-26361 | A | 10 February 2011 | (Family: none) | | | |
| WO | 2018/174198 | A1 | 27 September 2018 | CN | 110431206 | A | |
| | | | | KR | 10-2019-0124250 | A | |
| JP | 2017-61676 | A | 30 March 2017 | (Family: none) | | | |
| JP | 2010-49820 | A | 04 March 2010 | (Family: none) | | | |
| WO | 2021/167090 | A1 | 26 August 2021 | (Family: none) | | | |
| WO | 2021/167091 | A1 | 26 August 2021 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012007046 A
- WO 2011124765 A
- WO 2019087118 A
- WO 2021167090 A
- WO 2021167091 A
- JP 2021025496 A
- JP 2013524288 W

- WO 2019146628 A
- JP 2010189212 A
- JP 2008040171 A
- JP 2006011175 A
- WO 2004113966 A
- JP 2004113966 A
- WO 2013524288 A

**Non-patent literature cited in the description**

- Organic Peroxides Catalog. NOF CORPORATION, May 2003